# EUROPÄISCHE PATENTSCHRIFT

(11) **EP 3 397 570 B1**
(45) Veröffentlichungstag und Bekanntmachung des Hinweises auf die Patenterteilung: **12.02.2020**
(21) Anmeldenummer: 16822611.6
(22) Anmeldetag: 22.12.2016
(51) Int. Cl.: B65D 75/32, A61J 1/03

(54) **KUNSTSTOFFFOLIENFORMTEIL, HERSTELLUNGSVERFAHREN UND BLISTER**
MOLDED PLASTIC FILM ARTICLE, MANUFACTURING METHOD, AND BLISTER
PIÈCE MOULÉE EN FEUILLE DE PLASTIQUE, PROCÉDÉ DE FABRICATION ET BLISTER

(30) Priorität: 30.12.2015 DE 102015016911; 21.01.2016 DE 102016000592
(43) Veröffentlichungstag der Anmeldung: 07.11.2018
(73) Patentinhaber: Giesecke+Devrient Currency Technology GmbH, 81677 München (DE)
(72) Erfinder: WESSELY, Stephan, 81477 München (DE)
(86) Internationale Anmeldenummer: PCT/EP2016/002161
(87) Internationale Veröffentlichungsnummer: WO 2017/114590

(56) Entgegenhaltungen:
- WO-A1-2006/056216
- WO-A2-2011/064162
- DE-A1-102009 041 583
- DE-A1-102009 058 243
- US-A1- 2001 032 796

## Beschreibung

Die Erfindung betrifft ein mit einer semitransparenten Funktionsschicht versehenes Kunststofffolienformteil. Die Erfindung betrifft des Weiteren einen Blister, insbesondere eine Tablettenverpackung bzw. einen Tablettenblister, umfassend ein mit einer semitransparenten Funktionsschicht versehenes Kunststofffolienformteil und eine Abdeckfolie. Die Erfindung betrifft weiterhin ein Verfahren zum Herstellen des mit einer semitransparenten Funktionsschicht versehenen Kunststofffolienformteils.

Unter einem Blister bzw. einer Sichtverpackung versteht man eine Produktverpackung, die es dem potentiellen Käufer ermöglicht, den verpackten Gegenstand optisch wahrzunehmen oder zumindest die Form des Gegenstandes zu erahnen. Der Gegenstand wird dabei von einem mit einer Abdeckfolie verschlossenen Kunststofffolienformteil fixiert. Bei Medikamenten, z.B. Tabletten, besteht die Abdeckfolie zumeist aus Aluminium. Eine Tablettenverpackung bzw. ein Tablettenblister wird auch Durchdrückpackung genannt. Die Anordnung der Tabletten in einzelnen Vertiefungen bzw. Kavitäten des Kunststofffolienformteils, das durch die Aluminiumfolie versiegelt wird, ist hygienisch von Vorteil, da unerwünschte Einflüsse wie hohe Luftfeuchtigkeit oder Schmutz ausgeschlossen sind.

Die Herstellung von Blistern wird z.B. in der WO 97/010159 A1 beschrieben., die als der nächste Stand der Technik angesehen werden kann.

Die EP 1 876 033 A1 beschreibt ein Verpackungsmaterial, insbesondere für den Pharmabereich, das ein metallisches Trägersubstrat mit einem in zwei unterschiedlichen visuell erkennbaren Farben gedrucktes Linienraster aufweist.

Der vorliegenden Erfindung liegt die allgemeine Aufgabe zugrunde, die im Stand der Technik bekannten Verpackungen kundenfreundlicher zu gestalten. Weiterhin liegt der vorliegenden Erfindung die bevorzugte Aufgabe zugrunde, die Fälschungssicherheit der Verpackungen des Standes der Technik zu erhöhen.

Die Aufgabe wird durch die in den unabhängigen Ansprüchen definierten Merkmalskombinationen gelöst. Weiterbildungen der Erfindung sind Gegenstand der Unteransprüche.

### Zusammenfassung der Erfindung

1. Die Erfindung betrifft ein Kunststofffolienformteil für einen Blister, insbesondere einen Tablettenblister, umfassend ein eine semitransparente Funktionsschicht aufweisendes transparentes Trägersubstrat, wobei die semitransparente Funktionsschicht so beschaffen ist, dass das Kunststofffolienformteil bei der Betrachtung im Auflicht eine erste, visuell erkennbare Farbe aufweist und bei der Betrachtung im Durchlicht eine zweite, visuell erkennbare Farbe aufweist.

Das Kunststofffolienformteil weist z.B. eine Vertiefung bzw. Kavität oder mehrere Vertiefungen bzw. Kavitäten auf, wobei die Vertiefungen bzw. Kavitäten für die Aufnahme von zu verpackenden Gegenständen, z.B.

Tabletten, geeignet sind. Das Kunststofffolienformteil kann insbesondere durch eine Abdeckfolie, z.B. eine Aluminiumfolie, versiegelt bzw. verschlossen werden.

In einem Blister, der aus dem erfindungsgemäßen Kunststofffolienformteil, einer Abdeckfolie und dem Verpackungsgut (z.B. Tabletten) zusammengesetzt ist, kann der Farbwechsel bei der Betrachtung im Durchlicht einerseits und bei der Betrachtung im Auflicht andererseits besonders gut wahrgenommen werden, wenn die Abdeckfolie transparent ist oder wenn die als Durchdrückfolie ausgestaltete opake Abdeckfolie im Bereich des aus dem Blister entfernten bzw. hindurchgedrückten Verpackungsgutes (z.B. eine Tablette) nicht mehr vorhanden ist.

Das transparente Trägersubstrat des Kunststofffolienformteils beruht z.B. auf einem der folgenden Materialien, die jeweils als eine einzelne Schicht oder in Form mehrerer Schichten vorliegen können:
- PVC (Polyvinylchlorid),
- PVDC (Polyvinylidenchlorid),
- PVC/PVDC-Mehrschichtanordnung,
- PVC/ PE/ PVDC-Mehrschichtanordnung,
- PVC/ ACLAR®-Mehrschichtanordnung,
- PP (Polypropylen),
- PET (Polyester),
- PS (Polystyrol),
- COP (Cycloolefinpolymer),
- COC (Cycloolefin-Copolymer),
- COC/COC-Mehrschichtanordnung,
- PP/COC/PP-Mehrschichtanordnung,
- PP/COC/EVOH/ PP-Mehrschichtanordnung,
- PETG/ COC/ PETG-Mehrschichtanordnung,
- PVC/COC/PVC-Mehrschichtanordnung,
- mit PVDC beschichtetes COC,
- PETG/PCTFE-Mehrschichtanordnung,
- PETG/EVOH/PCTFE-Mehrschichtanordnung,
- PVC/PCTFE-Mehrschichtanordnung,
- PVC/ PE/ PCTFE-Mehrschichtanordnung,
- PVC/PCTFE/PVC-Mehrschichtanordnung, und
- PVC/EVOH/PCTFE- Mehrschichtanordnung.

Im Falle, dass das transparente Trägersubstrat des Kunststofffolienformteils auf einer Mehrschichtanordnung basiert, können zwei einzelne Schichten insbesondere mittels einer Klebschicht miteinander verbunden sein (z.B. PVDC/ Klebschicht/ PVC-Aufbau, PVDC/ Klebschicht/ PE/ Klebschicht/ PVC-Aufbau oder PP/Klebschicht/COC/Klebschicht/PP-Aufbau). Anstelle einer Klebschicht kann für das Verbinden zweier einzelner Schichten einer Mehrschichtanordnung eine polymere Heißsiegelschicht verwendet werden, die z.B. mittels Coextrusion erhältlich ist. Als polymere Heißsiegelschicht ist z.B. Polyethylen-Copolymer geeignet.

Das transparente Trägersubstrat des Kunststofffolienformteils kann z.B. auf seiner Rückseite (d.h. zum verpackten Gegenstand gerichtet) oder auf seiner Vorderseite (d.h. auf der dem verpackten Gegenstand entgegengesetzten Seite) mit der semitransparenten Funktionsschicht versehen sein. Im Falle, dass das transparente Trägersubstrat auf einer Mehrschichtanordnung basiert, kann die semitransparente Funktionsschicht z.B. im Inneren der Mehrschichtanordnung vorliegen, d.h. eine innere Schicht der Mehrschichtanordnung kann auf ihrer Vorderseite oder auf ihrer Rückseite mit der semitransparenten Funktionsschicht versehen sein.

Im Falle, dass die semitransparente Funktionsschicht auf einem mehrschichtigen Aufbau basiert (siehe die spätere Beschreibung), kann insbesondere ein Teil des mehrschichtigen Aufbaus auf der Vorderseite des transparenten Trägersubstrats des Kunststofffolienformteils vorliegen und der andere Teil des mehrschichtigen Aufbaus auf der Rückseite des transparenten Trägersubstrats des Kunststofffolienformteils vorliegen.

Im Falle, dass die semitransparente Funktionsschicht auf einem mehrschichtigen Aufbau basiert und das transparente Trägersubstrat des Kunststofffolienformteils auf einer Mehrschichtanordnung basiert, kann insbesondere ein Teil des mehrschichtigen Aufbaus der semitransparenten Funktionsschicht auf der Vorderseite einer (insbesondere inneren) Schicht des transparenten Trägersubstrats des Kunststofffolienformteils vorliegen und der andere Teil des mehrschichtigen Aufbaus der semitransparenten Funktionsschicht auf der Rückseite der (insbesondere inneren) Schicht des transparenten Trägersubstrats des Kunststofffolienformteils vorliegen. Auf diese Weise wird die semitransparente Funktionsschicht hervorragend vor äußeren Einflüssen geschützt.

Die semitransparente Funktionsschicht ist z.B. mittels Aufdampfen oder drucktechnisch erhältlich. Die semitransparente Funktionsschicht kann einen einschichtigen oder einen mehrschichtigen Aufbau aufweisen. Im Falle eines mehrschichtigen Aufbaus ist es möglich, dass alle Schichten mittels Aufdampfen erzeugt werden; alternativ ist es möglich, dass eine oder mehrere Schichten mittels Aufdampfen erzeugt werden und eine weitere oder mehrere weitere Schichten drucktechnisch erzeugt werden (zum Beispiel zwei mittels Aufdampfen erzeugte semitransparente metallische Schichten und eine dazwischen angeordnete, drucktechnisch erhältliche, auf Nitrocellulose basierende dielektrische Schicht). Des Weiteren kann die semitransparente Funktionsschicht z.B. in Form einer kontinuierlichen Beschichtung vorliegen oder in Form einer diskontinuierlichen, z.B. aus metallischen Pigmenten bzw. Effektpigmenten erzeugten Beschichtung vorliegen. Konkrete Beispiele im Hinblick auf die semitransparente

Funktionsschicht sind insbesondere die folgenden Schichtsysteme A), B) C) und D):
A) zwei semitransparente metallische Schichten und eine dazwischen angeordnete dielektrische Schicht;
B) zwei semitransparente metallische Schichten und eine dazwischen angeordnete, bevorzugt 1 bis 2 Mikrometer dicke, Farbschicht (z.B. in blauer Farbe); bevorzugt sind die beiden semitransparenten metallischen Schichten zusätzlich an der Außenseite jeweils mit einer weiteren, bevorzugt 1 bis 2 Mikrometer dicken, Farbschicht, insbesondere in einer Komplementärfarbe zu der zwischen den metallischen Schichten angeordneten Farbschicht (z.B. in gelber Farbe), beschichtet (auf diese Weise ergibt sich der folgende Schichtaufbau mit einem Gold/Blau-Farbwechsel in Auflicht- bzw. Durchlicht-Ansicht: gelbe Druckschicht - semitransparente metallische Schicht - blaue Druckschicht - semitransparente metallische Schicht - gelbe Druckschicht); des Weiteren ist z.B. das folgende, die Schichten a) bis c) umfassende Schichtsystem möglich: a) gelb eingefärbte, "silberne" Spiegelschicht, erhältlich mittels gelb eingefärbter Metallpigmente, die aus der WO 2005/051675 A2 bekannt sind (die Metallpigmente beruhen auf einem Metall, das vorzugsweise von der Gruppe bestehend aus Aluminium, Edelstahl, Nichrome, Gold, Silber, Platin und Kupfer gewählt ist; das Metall ist insbesondere bevorzugt Aluminium, wobei der mittlere Teilchendurchmesser bevorzugt in einem Bereich von 8 bis 15 µm, weiter bevorzugt in einem Bereich von 9 bis 10 µm liegt, gemessen mit einem Coulter LS130 Laserdiffraktionsgranulometer; eine solche Druckfarbe ermöglicht die Bereitstellung einer "silbernen" Spiegelschicht), b) blaue, bevorzugt 1 bis 2 Mikrometer dicke, Farbschicht, c) gelb eingefärbte, "silberne" Spiegelschicht, erhältlich mittels gelb eingefärbter Metallpigmente, die aus der WO 2005/051675 A2 bekannt sind (siehe hierzu die Beschreibung zur Schicht a));
C) das obige Schichtsystem kann alternativ so ausgestaltet werden, dass einige der Schichten auf der Vorderseite einer Trägersubstrat-Schicht des Kunststofffolienformteils (insbesondere eine innere Schicht (z.B. COC) eines auf einer Mehrschichtanordnung (z.B. PP/COC/PP) basierenden Trägersubstrat des Kunststofffolienformteils) angeordnet sind und einige Schichten auf der Rückseite der Trägersubstrat-Schicht des Kunststofffolienformteils angeordnet sind; z.B. ist das folgende, die Schichten a) bis f) umfassende Schichtsystem möglich: a) gelbe, bevorzugt 1 bis 2 Mikrometer dicke, Farbschicht, b) semitransparente metallische Schicht (z.B. Aluminium), c) Trägersubstrat-Schicht (z.B. COC), d) blaue, bevorzugt 1 bis 2 Mikrometer dicke, Farbschicht, e) semitransparente metallische Schicht (z.B. Aluminium), f) gelbe, bevorzugt 1 bis 2 Mikrometer dicke, Farbschicht; des Weiteren ist z.B. das folgende, die Schichten a) bis d) umfassende Schichtsystem möglich: a) gelb eingefärbte, "silberne" Spiegelschicht, erhältlich mittels gelb eingefärbter Metallpigmente, die aus der WO 2005/051675 A2 bekannt sind (die Metallpigmente beruhen auf einem Metall, das vorzugsweise von der Gruppe bestehend aus Aluminium, Edelstahl, Nichrome, Gold, Silber, Platin und Kupfer gewählt ist; das Metall ist insbesondere bevorzugt Aluminium, wobei der mittlere Teilchendurchmesser bevorzugt in einem Bereich von 8 bis 15 µm, weiter bevorzugt in einem Bereich von 9 bis 10 µm liegt, gemessen mit einem Coulter LS130 Laserdiffraktionsgranulometer; eine solche Druckfarbe ermöglicht die Bereitstellung einer "silbernen" Spiegelschicht), b) Trägersubstrat-Schicht (z.B. COC), c) blaue, bevorzugt 1 bis 2 Mikrometer dicke, Farbschicht, d) gelb eingefärbte, "silberne" Spiegelschicht, erhältlich mittels gelb eingefärbter Metallpigmente, die aus der WO 2005/051675 A2 bekannt sind (siehe hierzu die Beschreibung zur Schicht a));
D) die oben unter B) und C) genannten Schichtsysteme können selbstverständlich hinsichtlich der gelben Farbschicht und der blauen Farbschicht dahingehend variiert werden, dass anstelle von Gelb bzw. Blau andere Farben verwendet werden, die insbesondere zueinander komplementär sind.

Grundsätzlich kann das Kunststofffolienformteil vollflächig mit der semitransparenten Funktionsschicht versehen sein. Des Weiteren kann die semitransparente Funktionsschicht lediglich in einem Teilbereich oder in mehreren Teilbereichen vorliegen. Beispielsweise kann das Kunststofffolienformteil so beschaffen sein, dass die semitransparente Funktionsschicht Aussparungen aufweist, die mit den Kavitäten des Kunststofffolienformteils deckungsgleich sind. Im Falle des Abdeckens des Kunststofffolienformteils mit einer transparenten Abdeckfolie nimmt der Betrachter in diesem Fall nur in den Bereichen außerhalb der Kavitäten bei der Betrachtung im Auflicht eine erste, visuell erkennbare Farbe wahr und bei der Betrachtung im Durchlicht eine zweite, visuell erkennbare Farbe wahr.

In den folgenden Absätzen werden mögliche Ausgestaltungen von Kunststofffolienformteilen und Blistern, sowie Verfahren zu deren Herstellung vorgestellt, die lediglich beispielhaft aufgeführt sind und über den in den Ansprüchen definierten Schutzumfang hinausgehen können.
2. (Bevorzugte Ausgestaltung) Kunststofffolienformteil nach Absatz 1, wobei das Kunststofffolienformteil so beschaffen ist, dass im Falle des Vorhandenseins verpackter Gegenstände, z.B. Tabletten, und des Vorhandenseins einer das Kunststofffolienformteil verschließenden opaken Abdeckfolie ein vom Verbraucher entnommener verpackter Gegenstand anhand des Fehlens der opaken Abdeckfolie im Bereich des entnommenen Gegenstandes bei der Betrachtung des Kunststofffolienformteils von der der Abdeckfolie entgegengesetzten Seite her im Durchlicht in Form eines durch die erste, visuell erkennbare Farbe und die zweite, visuell erkennbare Farbe gebildeten Motivs erkennbar ist.
3. (Bevorzugte Ausgestaltung) Kunststofffolienformteil nach Absatz 1 oder 2, wobei die semitransparente Funktionsschicht einen mehrschichtigen Aufbau mit zwei semitransparenten metallischen Schichten und einer zwischen den zwei semitransparenten metallischen Schichten angeordneten dielektrischen Schicht aufweist.
4. (Bevorzugte Ausgestaltung) Kunststofffolienformteil nach Absatz 3, wobei die beiden semitransparenten metallischen Schichten unabhängig voneinander aus einem Metall gebildet sind und das Metall jeweils von der Gruppe bestehend aus Al, Ag, Ni, Cr, Cu, Au und einer Legierung eines oder mehrerer der vorstehend genannten Elemente gewählt ist und die dielektrische Schicht eine SiO₂-Schicht, eine ZnO-Schicht, eine Al₂O₃-Schicht, eine TiO₂-Schicht, eine Schicht aus einem Nitrid oder Oxynitrid eines der Elemente Si, Zn, Al oder Ti oder eine MgF₂-Schicht oder eine, z.B. drucktechnisch erhältliche, Nitrocellulose-Schicht ist.
5. (Bevorzugte Ausgestaltung) Kunststofffolienformteil nach Absatz 4, wobei die beiden semitransparenten metallischen Schichten von Al oder Ag gewählt sind und die dielektrische Schicht eine SiO₂-Schicht ist.
6. (Bevorzugte Ausgestaltung) Kunststofffolienformteil nach einem der Absätze 3 bis 5, wobei das Kunststofffolienformteil bei der Betrachtung im Auflicht goldfarben erscheint und bei der Betrachtung im Durchlicht einen blauen Farbton aufweist.
7. (Bevorzugte Ausgestaltung) Kunststofffolienformteil nach einem der Absätze 1 oder 2, wobei die semitransparente Funktionsschicht drucktechnisch mittels einer Effektpigment-Zusammensetzung erhältlich ist.
8. (Bevorzugte Ausgestaltung) Kunststofffolienformteil nach einem der Absätze 1 bis 7, wobei das transparente Trägersubstrat des Kunststofffolienformteils auf einer Mehrschichtanordnung mit zumindest zwei Schichten basiert und die semitransparente Funktionsschicht zwischen den beiden Schichten angeordnet ist, oder das transparente Trägersubstrat des Kunststofffolienformteils auf einer Mehrschichtanordnung mit zumindest einer inneren Schicht und zwei Deckschichten basiert und die semitransparente Funktionsschicht zwischen der inneren Schicht und einer der beiden Deckschichten angeordnet ist, wobei die Mehrschichtanordnung bevorzugt von der Gruppe der folgenden Elemente gewählt ist:
   - PVC/PVDC-Mehrschichtanordnung,
   - PVC/PE/PVDC-Mehrschichtanordnung,
   - PVC/ ACLAR®-Mehrschichtanordnung,
   - COC/COC-Mehrschichtanordnung,
   - PP/COC/PP-Mehrschichtanordnung,
   - PP/COC/EVOH/PP-Mehrschichtanordnung,
   - PETG/COC/PETG-Mehrschichtanordnung,
   - PVC/COC/PVC-Mehrschichtanordnung,
   - mit PVDC beschichtetes COC,
   - PETG/PCTFE-Mehrschichtanordnung,
   - PETG/ EVOH/ PCTFE-Mehrschichtanordnung,
   - PVC/PCTFE-Mehrschichtanordnung,
   - PVC/ PE/ PCTFE-Mehrschichtanordnung,
   - PVC/PCTFE/PVC-Mehrschichtanordnung, und
   - PVC/EVOH/PCTFE- Mehrschichtanordnung.
9. (Bevorzugte Ausgestaltung) Kunststofffolienformteil nach Absatz 8, wobei das transparente Trägersubstrat des Kunststofffolienformteils auf einer Mehrschichtanordnung mit zumindest einer inneren Schicht und zwei Deckschichten basiert und die semitransparente Funktionsschicht zwischen der inneren Schicht und einer der beiden Deckschichten angeordnet ist, wobei die innere Schicht eine COC-Schicht ist und die beiden Deckschichten jeweils eine PP-Schicht sind.
10. (Zweiter Aspekt der Erfindung) Blister bzw. Blisterverpackung, insbesondere Tablettenblister, umfassend ein Kunststofffolienformteil nach einem der Absätze 1 bis 9 und eine bevorzugt opake Abdeckfolie, wobei das Kunststofffolienformteil die Vorderseite des Blisters definiert und die Abdeckfolie die Rückseite des Blisters definiert.
   Die Abdeckfolie ist insbesondere eine Durchdrückfolie für eine Durchdrückverpackung, bei der die Durchdrückfolie das Verpackungsgut (z.B. pharmazeutische Erzeugnisse wie etwa Tabletten) abschließt, aber durch das Durchdrücken des Verpackungsgutes aufreißbar oder aufbrechbar ist. Die Fähigkeit des Aufbrechens kann durch mechanische Einwirkung, z.B. mittels Perforationen und/oder Schneidrillen und/oder verdünnte Bereiche in der Abdeckfolie (die z.B. mittels Prägen erhältlich sind), zusätzlich gesteigert werden. Die Abdeckfolie ist bevorzugt opak, es eignen sich aber auch transparente oder semitransparente Abdeckfolien. Die Abdeckfolie basiert insbesondere auf einem der folgenden Materialien:
   - insbesondere zur Herstellung opaker Abdeckfolien geeignet: Aluminium, insbesondere Hart-Aluminium, Weich-Aluminium, Papier-Aluminium-Kombination oder Papier-Polyester-Aluminium-Laminat; Aluminium wird insbesondere im Falle einer opaken Abdeckfolie bevorzugt;
   - Polyolefinharz; insbesondere Polypropylen oder einen anorganischen Füllstoff aufweisendes Polypropylen, wobei der anorganische Füllstoff z.B. Calciumcarbonat, Talkum, Aluminiumoxid, Titandioxid, Diatomeenerde, Ton, Kaolin, Kreide, Glasfaser oder ein Gemisch zweier oder mehrerer der vorstehend genannten Stoffe ist (je nach Füllstoff-Gehalt können insbesondere semitransparente oder transparente Abdeckfolien erhalten werden);
   - insbesondere zur Herstellung transparenter Abdeckfolien geeignet: Cycloolefin-Copolymer (COC) oder Cycloolefin-Polymer (COP); oder Filme, die wenigstens eine Schicht aus Cycloolefin-Copolymer (COC) oder Cycloolefin-Polymer (COP) enthalten, z.B. Filme mit dem Aufbau COC/PE/COC oder COC/PE-LLD/COC oder ein Film mit einer COC-Kernschicht (z.B. die folgende Schichtenfolge: polymere Thermoschutzschicht (bevorzugt gewählt von COC, COP, PP, PA oder PET)
   - COC-Kernschicht - polymere Heißsiegelschicht), beschrieben in der WO 2009/000403 A1 oder in der WO 2010/139409 A1;
   - orientiertes Polyethylenterephthalat (OPET); oder ein OPET-Film, der mit einer Polyethylenschicht oder einer Polypropylenschicht zu einem Laminat kombiniert ist, wobei das Laminat gegebenenfalls Schneidrillen bzw. Einschnitte aufweisen kann;
   - insbesondere zur Herstellung transparenter Abdeckfolien geeignet: Polyolefin (A) enthaltende Polymerphase, in der eine Kohlenwasserstoffharz-Komponente (B) in gelöster Form enthalten ist, wobei die Kohlenwasserstoffharz-Komponente (B) von dem Polyolefin (A) verschieden ist, zyklische Seitengruppen an der Polymerkette umfasst und mit einem Anteil von mindestens 3 Gew.-% an der Gesamtmasse im Trägersubstrat enthalten ist, wobei das mittlere Molekulargewicht der Kohlenwasserstoffharz-Komponente (B) kleiner oder gleich 10 000 ist; als Polyolefin (A) werden Polyethylen, Polypropylen oder ein Copolymer oder Terpolymer von Ethylen und/ oder Propylen bevorzugt; Komponente (B) ist insbesondere ein amorphes Polymer; solche Durchdrückfolien sind aus der DE 19613 960 A1 bekannt;
   - insbesondere zur Herstellung transparenter Abdeckfolien geeignet: einaxial orientierter Polypropylenfilm, bestrahlt mit ionisierender Strahlung.

   Für das Versiegeln des Kunststofffolienformteils mit der Abdeckfolie kann die Abdeckfolie insbesondere einen Heißsiegellack (bzw. Heißsiegelbindemittel), der gegebenenfalls mittels einer Heißsiegellackgrundierung (bzw. Haftvermittler) auf der Abdeckfolie angeordnet ist, aufweisen. Anstelle der Formulierung "Heißsiegelbindemittel und gegebenenfalls vorhandener Haftvermittler" wird hierin auch der Begriff "Heißsiegelbeschichtung" verwendet.
11. (Bevorzugte Ausgestaltung) Blister nach Absatz 10, wobei die Abdeckfolie opak ist und der Blister so beschaffen ist, dass der Bereich eines vom Verbraucher aus dem Blister entnommenen verpackten Gegenstandes, z.B. eine Tablette, infolge des in diesem Bereich nicht mehr vorhandenen Teils der opaken Abdeckfolie bei der Betrachtung der Vorderseite des Blisters im Durchlicht in Form eines durch die erste, visuell erkennbare Farbe und die zweite, visuell erkennbare Farbe gebildeten Motivs erkennbar ist.
12. (Bevorzugte Ausgestaltung) Blister nach einem der Absätze 10 oder 11, wobei der Blister ein Blister für Pharmaerzeugnisse, bevorzugt eine Tablettenverpackung bzw. ein Tablettenblister ist.
13. (Dritter Aspekt der Erfindung) Verfahren zum Herstellen eines Kunststofffolienformteils nach einem der Absätze 1 bis 9, umfassend
   a) den Schritt des Bereitstellens eines transparenten Trägersubstrats;
   b) den Schritt des Formens des transparenten Trägersubstrats, bevorzugt mittels Thermoformen; und
   c) den Schritt des Versehens des geformten transparenten Trägersubstrats mit einer semitransparenten Funktionsschicht.
14. (Bevorzugte Ausgestaltung) Verfahren nach Absatz 13, wobei die semitransparente Funktionsschicht im Schritt c) mittels Aufdampfen oder drucktechnisch aufgebracht wird.
15. (Bevorzugte Ausgestaltung) Verfahren nach Absatz 13, wobei der Schritt
   c) so erfolgt, dass
   c1) ein separates transparentes Trägersubstrat, das eine semitransparente Funktionsschicht aufweist, bereitgestellt wird; und
   c2) das die semitransparente Funktionsschicht aufweisende separate transparente Trägersubstrat auf das geformte transparente Trägersubstrat aufgebracht wird, z.B. mittels HPF (High-Pressure-Forming-Verfahren) oder mittels einer Klebschicht.

   Das separate transparente Trägersubstrat ist insbesondere eine Kunststofffolie, z.B. eine Polyethylenterephthalat-Folie.
   Das eine semitransparente Funktionsschicht aufweisende separate transparente Trägersubstrat kann im erhaltenen, mit einer Abdeckfolie verschlossenen Kunststofffolienformteil insbesondere eine Zwischenlage bilden, d.h. der erhaltene Blister weist den folgenden Aufbau auf:
   - Kunststofffolienformteil (als obere Lage);
   - separates transparentes Trägersubstrat, z.B. eine Kunststofffolie wie etwa eine Polyethylenterephthalat-Folie, die mit einer semitransparenten Funktionsschicht versehen ist (als Zwischenlage);
   - Abdeckfolie (als untere Lage).

   In diesem Fall kann die Abdeckfolie insbesondere transparent sein und die Zwischenlage Aussparungen aufweisen, die mit den Kavitäten des Kunststofffolienformteils deckungsgleich sind. Somit nimmt der Betrachter in diesem Fall nur in den Bereichen außerhalb der Kavitäten bei der Betrachtung im Auflicht eine erste, visuell erkennbare Farbe wahr und bei der Betrachtung im Durchlicht eine zweite, visuell erkennbare Farbe wahr.
16. (Vierter Aspekt der Erfindung) Verfahren zum Herstellen eines Kunststofffolienformteils nach einem der Absätze 1 bis 9, umfassend
   a) den Schritt des Bereitstellens eines transparenten Trägersubstrats; oder, im Falle, dass das transparente Trägersubstrat auf einer Mehrschichtanordnung basiert, den Schritt des Bereitstellens zumindest einer Schicht der das transparente Trägersubstrat bildenden Mehrschichtanordnung;
   b) das Versehen des transparenten Trägersubstrats mit einer semitransparenten Funktionsschicht; oder, im Falle, dass das transparente Trägersubstrat auf einer Mehrschichtanordnung basiert, das Versehen der zumindest einen Schicht der das transparente Trägersubstrat bildenden Mehrschichtanordnung mit einer semitransparenten Funktionsschicht;
   c) den Schritt des Formens des nach dem Schritt b) erhaltenen, die semitranstransparente Funktionsschicht aufweisenden transparenten Trägersubstrats, bevorzugt mittels Thermoformen.
17. (Bevorzugte Ausgestaltung) Verfahren nach Absatz 16, wobei die semitransparente Funktionsschicht im Schritt b) mittels Aufdampfen oder drucktechnisch aufgebracht wird.

### Ausführliche Beschreibung der Erfindung

In der Beschreibung werden die Begriffe "Kunststofffolienformteil" und "Kunststoffformfolie" als Synonyme verwendet.

Die Vorderseite der erfindungsgemäßen Blisterverpackung wird durch das Kunststofffolienformteil definiert. Die Rückseite der erfindungsgemäßen Blisterverpackung wird durch die Abdeckfolie definiert.

Eine Betrachtung im Auflicht ist im Sinne dieser Erfindung eine Beleuchtung des jeweiligen Gegenstandes von einer Seite und eine Betrachtung des Gegenstandes von derselben Seite. Eine Betrachtung im Auflicht liegt somit beispielsweise dann vor, wenn die Vorderseite des Blisters beleuchtet und auch betrachtet wird.

Eine Betrachtung im Durchlicht ist im Sinne dieser Erfindung eine Beleuchtung des jeweiligen Gegenstandes von einer Seite und eine Betrachtung des Gegenstandes von der gegenüberliegenden Seite. Eine Betrachtung im Durchlicht liegt somit beispielsweise dann vor, wenn die Rückseite des Blisters beleuchtet und die Vorderseite des Blisters betrachtet wird. Das Licht scheint somit mindestens teilweise durch die Verpackung hindurch.

Die erfindungsgemäße Blisterverpackung zeichnet sich dadurch aus, dass sie ein semitransparentes Kunststofffolienformteil mit einem Farbwechsel bei der Betrachtung im Auflicht (Reflexion) einerseits und bei der Betrachtung im Durchlicht (Transmission) andererseits aufweist.

Da ein z.B. in einer Kavität des Kunststofffolienformteils der Verpackung enthaltener Gegenstand, z.B. eine Tablette, die Licht-Transmission erniedrigt, nimmt der Betrachter den Gegenstand beim Betrachten der Verpackung mit Blick auf das Kunststofffolienformteil im Durchlicht im Wesentlichen in der Reflexionsfarbe der Abdeckfolie wahr (insbesondere im Falle der Verwendung einer transparenten Abdeckfolie). Der Bereich des Kunststofffolienformteils außerhalb des Gegenstandes erscheint dem Betrachter in der Transmissionsfarbe des Kunststofffolienformteils.

Im Falle des Verschließens des Kunststofffolienformteils mit einer opaken Abdeckfolie, z.B. einer Aluminiumfolie, führen die Bereiche des Blisters mit noch vorhandenen Tabletten und noch vorhandener opaker Abdeckfolie zu einer Erniedrigung der Licht-Transmission. Demgegenüber weisen die Bereiche des Blisters mit hindurchgedrückten bzw. entnommenen Tabletten und mit fehlender opaker Abdeckfolie eine erhöhte Licht-Transmission auf. Der Betrachter nimmt die Bereiche des Blisters, in denen noch Tabletten vorhanden sind, beim Betrachten des Blisters mit Blick auf das Kunststofffolienformteil im Durchlicht im Wesentlichen in der Reflexionsfarbe des Kunststofffolienformteils wahr. Die Bereiche des Blisters, in denen keine Tabletten mehr vorhanden sind, erscheinen dem Betrachter beim Betrachten des Blisters mit Blick auf das Kunststofffolienformteil im Durchlicht in der Transmissionsfarbe des Kunststofffolienformteils.

Das schnelle und unkomplizierte Auffinden des in der Blisterverpackung enthaltenen Gegenstandes ist insbesondere im Falle eines pharmazeutischen Erzeugnisses wie etwa eine Tablette vorteilhaft, z.B. als lebensrettende Sofortmaßnahme oder im Falle einer Bewusstseinsstörung des Konsumenten durch Alkoholeinfluss, Krankheitseinfluss oder Schockzustand.

Darüber hinaus ist die erfindungsgemäße Blisterverpackung infolge ihrer erhöhten Fälschungssicherheit besonders vorteilhaft, da semitransparente Kunststofffolienformteile mit Farbwechsel bei der Betrachtung im Auflicht einerseits und bei der Betrachtung im Durchlicht andererseits für den Fälscher verhältnismäßig schwer zugänglich sind. Darüber hinaus ist eine unkomplizierte Echtheitsprüfung der erfindungsgemäßen Blisterverpackung durch den Konsumenten, auch im Falle eines Kindes, durch das Betrachten der Blisterverpackung mit Blick auf das Kunststofffolienformteil im Auflicht und im Durchlicht ohne zusätzliche technische Hilfsmittel durchführbar.

Zur Erhöhung des Fälschungsschutzes kann das Kunststofffolienformteil mit zusätzlichen Fälschungssicherungsmitteln ausgestattet werden, z.B.
- die Bereitstellung einer zusätzlichen opaken Beschichtung, insbesondere eine Druckschicht oder eine Metallisierung, die Aussparungen in Form von Mustern, Zeichen oder einer Codierung aufweist;
- das Bedrucken mit (Mikro-)Schrift, insbesondere mit Effektpigmenten;
- das Bereitstellen lumineszierender oder magnetischer Sicherheitsmerkmale, die insbesondere maschinell erfassbar sind;
- das Bereitstellen eines zusätzlichen Hologramms, insbesondere eine Prägelackschicht mit einer diffraktiven Reliefstruktur, die ggf. mit einer Metallisierung versehen ist;
- das Bereitstellen einer mikrooptischen Reliefstruktur, insbesondere einer Mikrospiegel-Anordnung; die Herstellung einer mikrooptischen Reliefstruktur ist im Stand der Technik bekannt (siehe z.B. die WO 2014/060089 A2).

Das Kunststofffolienformteil kann im Hinblick auf seine gegenständliche Beschaffenheit so ausgestaltet werden, dass sein mechanischer und/oder optischer Zustand infolge von oxidativen Prozessen oder durch Feuchtigkeitseinfluss dem Konsumenten als Haltbarkeitsnachweis dient. So kann z.B. die semitransparente Funktionsschicht ein Metall enthalten, das sich durch Sauerstoff- und/ oder Feuchtigkeitseinfluss optisch verändert.

Das transparente Trägersubstrat des Kunststofffolienformteils beruht z.B. auf einem der folgenden Materialien, die jeweils als eine einzelne Schicht oder in Form mehrerer Schichten vorliegen können:
- PVC (Polyvinylchlorid),
- PVDC (Polyvinylidenchlorid),
- PVC/ PVDC-Mehrschichtanordnung,
- PVC/ PE/ PVDC-Mehrschichtanordnung,
- PVC/ ACLAR®-Mehrschichtanordnung,
- PP (Polypropylen),
- PET (Polyester),
- PS (Polystyrol),
- COP (Cycloolefinpolymer),
- COC (Cycloolefin-Copolymer),
- COC/ COC-Mehrschichtanordnung,
- PP/COC/PP-Mehrschichtanordnung,
- PP/ COC/ EVOH/ PP-Mehrschichtanordnung,
- PETG/ COC/ PETG-Mehrschichtanordnung,
- PVC/COC/PVC-Mehrschichtanordnung,
- mit PVDC beschichtetes COC,
- PETG/PCTFE-Mehrschichtanordnung,
- PETG/ EVOH/ PCTFE-Mehrschichtanordnung,
- PVC/ PCTFE-Mehrschichtanordnung,
- PVC/ PE/ PCTFE-Mehrschichtanordnung,
- PVC/PCTFE/PVC-Mehrschichtanordnung, und
- PVC/EVOH/PCTFE- Mehrschichtanordnung.

Im Falle, dass das transparente Trägersubstrat des Kunststofffolienformteils auf einer Mehrschichtanordnung basiert, können zwei einzelne Schichten insbesondere mittels einer Klebschicht miteinander verbunden sein (z.B. PVDC/ Klebschicht/ PVC-Aufbau, PVDC/ Klebschicht/ PE/ Klebschicht/ PVC-Aufbau oder PP/Klebschicht/COC/Klebschicht/PP-Aufbau). Anstelle einer Klebschicht kann für das verbesserte Verbinden zweier einzelner Schichten einer Mehrschichtanordnung eine polymere Heißsiegelschicht verwendet werden, die z.B. mittels Coextrusion erhältlich ist. Als polymere Heißsiegelschicht ist z.B. Polyethylen-Copolymer geeignet.

Das erfindungsgemäße Kunststofffolienformteil kann z.B. eine Materialdicke im Bereich von 100 Mikrometer bis 600 Mikrometer aufweisen, wobei der Bereich von 200 Mikrometer bis 500 Mikrometer bevorzugt wird.

Das transparente Trägersubstrat des Kunststofffolienformteils kann z.B. auf seiner Rückseite (d.h. zum verpackten Gegenstand gerichtet) oder auf seiner Vorderseite (d.h. auf der dem verpackten Gegenstand entgegengesetzten Seite) mit der semitransparenten Funktionsschicht versehen sein. Im Falle, dass das transparente Trägersubstrat auf einer Mehrschichtanordnung basiert, kann die semitransparente Funktionsschicht z.B. im Inneren der Mehrschichtanordnung vorliegen, d.h. eine innere Schicht der Mehrschichtanordnung kann auf ihrer Vorderseite oder auf ihrer Rückseite mit der semitransparente Funktionsschicht versehen sein.

Im Falle, dass die semitransparente Funktionsschicht auf einem mehrschichtigen Aufbau basiert, kann insbesondere ein Teil des mehrschichtigen Aufbaus auf der Vorderseite des transparenten Trägersubstrats des Kunststofffolienformteils vorliegen und der andere Teil des mehrschichtigen Aufbaus auf der Rückseite des transparenten Trägersubstrats des Kunststofffolienformteils vorliegen.

Im Falle, dass die semitransparente Funktionsschicht auf einem mehrschichtigen Aufbau basiert und das transparente Trägersubstrat des Kunststofffolienformteils auf einer Mehrschichtanordnung basiert, kann insbesondere ein Teil des mehrschichtigen Aufbaus der semitransparenten Funktionsschicht auf der Vorderseite einer (insbesondere inneren) Schicht des transparenten Trägersubstrats des Kunststofffolienformteils vorliegen und der andere Teil des mehrschichtigen Aufbaus der semitransparenten Funktionsschicht auf der Rückseite der (insbesondere inneren) Schicht des transparenten Trägersubstrats des Kunststofffolienformteils vorliegen. Auf diese Weise wird die semitransparente Funktionsschicht hervorragend vor äußeren Einflüssen geschützt.

Die semitransparente Funktionsschicht weist bei der Betrachtung im Auflicht einerseits und bei der Betrachtung im Durchlicht andererseits unterschiedliche Farbtöne auf. Die beiden unterschiedlichen Farbtöne sind z.B. Komplementärfarben. Eine solche semitransparente Funktionsschicht beruht z.B. auf einem mehrschichtigen Aufbau mit zwei semitransparenten metallischen Schichten und einer zwischen den zwei semitransparenten metallischen Schichten angeordneten dielektrischen Schicht. Ein solcher mehrschichtiger Aufbau, der bei der Betrachtung im Auflicht goldfarben erscheint und bei der Betrachtung im Durchlicht einen blauen Farbton zeigt, ist z.B. aus der WO 2011/082761 A1 bekannt. Darüber hinaus beschreibt die WO 2011/032665 A1 ähnliche mehrschichtige Aufbauten.
Geeignete mehrschichtige Aufbauten mit zwei semitransparenten metallischen Schichten und einer zwischen den zwei semitransparenten metallischen Schichten angeordneten dielektrischen Schicht haben vorzugsweise die folgende gegenständliche Beschaffenheit:
- die beiden semitransparenten metallischen Schichten werden bevorzugt von Al oder Ag gewählt; die dielektrische Schicht ist insbesondere eine SiO₂-Schicht oder eine MgF₂-Schicht, bevorzugt eine SiO₂-Schicht;
- im Falle, dass jede der beiden semitransparenten metallischen Schichten auf Al beruht, liegt die jeweilige bevorzugte Schichtdicke in einem Bereich von 5 nm bis 20 nm, insbesondere bevorzugt in einem Bereich von 10 nm bis 14 nm; die dielektrische SiO₂-Schicht hat vorzugsweise eine Schichtdicke in einem Bereich von 50 nm bis 450 nm, weiter bevorzugt in einem Bereich von 80 nm bis 260 nm und insbesondere bevorzugt in einem Bereich von 210 nm bis 260 nm, wobei die Bereiche von 80 nm bis 100 nm und von 210 nm bis 240 nm speziell für die Bereitstellung eines Gold/Blau-Farbwechsels besonders bevorzugt werden;
- im Falle, dass jede der beiden semitransparenten metallischen Schichten auf Ag beruht, liegt die jeweilige bevorzugte Schichtdicke in einem Bereich von 15 nm bis 30 nm, insbesondere bevorzugt von 15 nm bis 25 nm; die dielektrische SiO₂-Schicht hat vorzugsweise eine Schichtdicke in einem Bereich von 50 nm bis 450 nm, weiter bevorzugt in einem Bereich von 80 nm bis 260 nm und insbesondere bevorzugt in einem Bereich von 210 nm bis 260 nm, wobei die Bereiche von 80 nm bis 100 nm und von 210 nm bis 240 nm speziell für die Bereitstellung eines Gold/ Blau-Farbwechsels besonders bevorzugt werden.

Die oben genannten mehrschichtigen Aufbauten mit zwei semitransparenten metallischen Schichten und einer zwischen den zwei semitransparenten metallischen Schichten angeordneten dielektrischen Schicht können einen symmetrischen Dreischichtaufbau aufweisen, bei dem sowohl das Material, als auch die Schichtdicke der beiden semitransparenten metallischen Schichten identisch sind. Alternativ kann aber auch ein asymmetrischer Dreischichtaufbau vorliegen, bei dem das Material und/oder die Schichtdicke der beiden semitransparenten metallischen Schichten unterschiedlich sind, z.B.
- ein Silber/ Dielektrikum/ Aluminium-Schichtsystem, wobei die Schichtdicken der Silber-Schicht und der Aluminium-Schicht identisch oder verschieden sind;
- ein Silber/Dielektrikum/Silber-Schichtsystem, wobei die Schichtdicken der beiden Silber-Schichten verschieden sind;
- ein Aluminium/ Dielektrikum/ Aluminium-Schichtsystem, wobei die Schichtdicken der beiden Aluminium-Schichten verschieden sind.

Die oben genannten mehrschichtigen Schichtaufbauten ermöglichen nicht nur die Erzeugung einer semitransparenten Funktionsschicht, die bei Betrachtung im Auflicht goldfarben erscheint und bei der Betrachtung im Durchlicht einen blauen Farbton zeigt, sondern es können je nach Wahl der Schichtdicke insbesondere der dielektrischen Schicht weitere Farbwechsel erzeugt werden, z.B.
- im Auflicht Magenta, im Durchlicht Blau-Grün;
- im Auflicht Türkis, im Durchlicht Orange-Gelb;
- im Auflicht Gold, im Durchlicht Blau-Violett;
- im Auflicht Silber, im Durchlicht Violett.

Die verschiedenen, oben genannten Farbwechsel kann ein Pharmahersteller zur Bereitstellung seiner Arzneimittel in Form verschiedener Tablettenverpackungen gemäß einer definierten Farbcodierung nutzen, wobei z.B. die folgende Farbcodierung denkbar ist:
- Kopfschmerztabletten: Tablettenverpackung mit einem Kunststofffolienformteil, das im Auflicht goldfarben und im Durchlicht blau erscheint;
- Tabletten gegen Magenschmerzen: Tablettenverpackung mit einem Kunststofffolienformteil, das im Auflicht Türkis und im Durchlicht Orange-Gelb erscheint;
- Schlaftabletten: Tablettenverpackung mit einem Kunststofffolienformteil, das im Auflicht Magenta und im Durchlicht Blau-Grün erscheint.

Die obige Farbcodierung ermöglicht dem Konsumenten, im Falle einer Bewusstseinsstörung z.B. die versehentliche Einnahme von Tabletten gegen Magenschmerzen anstelle von Kopfschmerztabletten zu vermeiden.

Eine semitransparente Funktionsschicht, die bei der Betrachtung im Auflicht einerseits und bei der Betrachtung im Durchlicht andererseits unterschiedliche Farbtöne aufweist, kann des Weiteren auf einer Effektpigment-Zusammensetzung basieren. Druckschichten auf Basis einer Effektpigment-Zusammensetzung, die bei der Betrachtung im Auflicht eine andere Farbe wie bei der Betrachtung im Durchlicht zeigt, insbesondere einen Gold/Blau-Farbwechsel, einen Gold/Violett-Farbwechsel, einen Grün-Gold/Magenta-Farbwechsel, einen Violett/Grün-Farbwechsel oder einen Silber/Opak-Farbwechsel, werden z.B. in der WO 2011/064162 A2 beschrieben. Die Pigmente weisen bevorzugt von Ende-zu-Ende eine längste Abmessung ("longest dimension of edge length") in einem Bereich von 15 nm bis 1000 nm auf und beruhen auf einem Übergangsmetall, das von der Gruppe bestehend aus Cu, Ag, Au, Zn, Cd, Ti, Cr, Mn, Fe, Co, Ni, Ru, Rh, Pd, Os, Ir und Pt gewählt ist. Das Übergangsmetall ist bevorzugt Ag. Das Aspektverhältnis (d.h. das Verhältnis der längsten Abmessung von Ende-zu-Ende bezogen auf die Dicke) ist vorzugsweise mindestens 1,5, insbesondere in einem Bereich von 1,5 bis 300. Das Verhältnis des Bindemittels zu Metallpigment ist vorzugsweise unterhalb von 10:1, insbesondere unterhalb 5:1. In Abhängigkeit von der Wahl des Aspektverhältnisses des Pigments, seiner längsten Abmessung von Ende-zu-Ende und der Einstellung des Pigment/ Bindemittel-Verhältnisses lässt sich die Farbe bei Betrachtung der Druckschicht in Transmission und die Farbe bei Betrachtung in Reflexion einstellen (z.B. Blau in Transmission und Silber, Gold, Bronze, Kupfer oder Violett in Reflexion; darüber hinaus auch Violett, Magenta, Pink, Grün oder Braun in Transmission und verschiedenen Farben in Reflexion, die von der Wahl des Pigment/Bindemittel-Verhältnisses abhängen). Farben mit Gold/ Blau-Farbwechsel zwischen Reflexion und Transmission (anders gesagt, zwischen Auflicht- und Durchlicht-Betrachtung) sind z.B. in den Beispielen 1, 2 und 3 in der Tabelle 1 der WO 2011/064162 A2 genannt. Des Weiteren zeigt Beispiel 4 eine Farbe mit Gold/Violett-Farbwechsel, Beispiel 5 eine Farbe mit Grün-Gold/Magenta-Farbwechsel, Beispiel 7 eine Farbe mit Violett/Grün-Farbwechsel und Beispiel 8 eine Farbe mit Silber/Opak-Farbwechsel.

Die verschiedenen, oben genannten Farbwechsel kann ein Pharmahersteller zur Bereitstellung seiner Arzneimittel in Form verschiedener Tablettenverpackungen gemäß einer definierten Farbcodierung nutzen, wobei z.B. die folgende Farbcodierung denkbar ist:
- Kopfschmerztabletten: Tablettenverpackung mit einem Kunststofffolienformteil, das im Auflicht goldfarben und im Durchlicht blau erscheint;
- Tabletten gegen Magenschmerzen: Tablettenverpackung mit einem Kunststofffolienformteil, das im Auflicht grün-gold und im Durchlicht magenta erscheint;
- Schlaftabletten: Tablettenverpackung mit einem Kunststofffolienformteil, das im Auflicht violett und im Durchlicht grün erscheint.

Die obige Farbcodierung ermöglicht dem Konsumenten, im Falle einer Bewusstseinsstörung z.B. die versehentliche Einnahme von Tabletten gegen Magenschmerzen anstelle von Kopfschmerztabletten zu vermeiden.

Eine semitransparente Funktionsschicht, die bei der Betrachtung im Auflicht einerseits und bei der Betrachtung im Durchlicht andererseits unterschiedliche Farbtöne aufweist, kann des Weiteren zumindest teilweise auf der Verwendung von konventionellen Farbschichten bzw. Farblacken basieren und gemäß einer der folgenden Varianten beschaffen sein:
1) zwei semitransparente metallische Schichten (z.B. 5 nm bis 15 nm Al) und eine dazwischen angeordnete, bevorzugt 1 bis 2 Mikrometer dicke, Farbschicht (z.B. in blauer Farbe); bevorzugt sind die beiden semitransparenten metallischen Schichten zusätzlich an der Außenseite jeweils mit einer weiteren, bevorzugt 1 bis 2 Mikrometer dicken, Farbschicht, insbesondere in einer Komplementärfarbe zu der zwischen den metallischen Schichten angeordneten Farbschicht (z.B. in gelber Farbe), beschichtet (auf diese Weise ergibt sich der folgende Schichtaufbau mit einem Gold/ Blau-Farbwechsel in Auflicht- bzw. Durchlicht-Ansicht: gelbe Druckschicht - semitransparente metallische Schicht - blaue Druckschicht - semitransparente metallische Schicht - gelbe Druckschicht); des Weiteren ist z.B. das folgende, die Schichten a) bis c) umfassende Schichtsystem möglich: a) gelb eingefärbte, "silberne" Spiegelschicht, erhältlich mittels gelb eingefärbter Metallpigmente, die aus der WO 2005/051675 A2 bekannt sind (die Metallpigmente beruhen auf einem Metall, das vorzugsweise von der Gruppe bestehend aus Aluminium, Edelstahl, Nichrome, Gold, Silber, Platin und Kupfer gewählt ist; das Metall ist insbesondere bevorzugt Aluminium, wobei der mittlere Teilchendurchmesser bevorzugt in einem Bereich von 8 bis 15 µm, weiter bevorzugt in einem Bereich von 9 bis 10 µm liegt, gemessen mit einem Coulter LS130 Laserdiffraktionsgranulometer; eine solche Druckfarbe ermöglicht die Bereitstellung einer "silbernen" Spiegelschicht), b) blaue, bevorzugt 1 bis 2 Mikrometer dicke, Farbschicht, c) gelb eingefärbte, "silberne" Spiegelschicht, erhältlich mittels gelb eingefärbter Metallpigmente, die aus der WO 2005/051675 A2 bekannt sind (siehe hierzu die Beschreibung zur Schicht a));
2) das obige Schichtsystem kann alternativ so ausgestaltet werden, dass einige der Schichten auf der Vorderseite einer Trägersubstrat-Schicht des Kunststofffolienformteils (insbesondere eine innere Schicht (z.B. COC) eines auf einer Mehrschichtanordnung (z.B. PP/COC/PP) basierenden Trägersubstrat des Kunststofffolienformteils) angeordnet sind und einige Schichten auf der Rückseite der Trägersubstrat-Schicht des Kunststofffolienformteils angeordnet sind; z.B. ist das folgende, die Schichten a) bis f) umfassende Schichtsystem möglich: a) gelbe, bevorzugt 1 bis 2 Mikrometer dicke, Farbschicht, b) semitransparente metallische Schicht (z.B. Aluminium), c) Trägersubstrat-Schicht (z.B. COC), d) blaue, bevorzugt 1 bis 2 Mikrometer dicke, Farbschicht, e) semitransparente metallische Schicht (z.B. Aluminium), f) gelbe, bevorzugt 1 bis 2 Mikrometer dicke, Farbschicht; des Weiteren ist z.B. das folgende, die Schichten a) bis d) umfassende Schichtsystem möglich: a) gelb eingefärbte, "silberne" Spiegelschicht, erhältlich mittels gelb eingefärbter Metallpigmente, die aus der WO 2005/051675 A2 bekannt sind (die Metallpigmente beruhen auf einem Metall, das vorzugsweise von der Gruppe bestehend aus Aluminium, Edelstahl, Nichrome, Gold, Silber, Platin und Kupfer gewählt ist; das Metall ist insbesondere bevorzugt Aluminium, wobei der mittlere Teilchendurchmesser bevorzugt in einem Bereich von 8 bis 15 µm, weiter bevorzugt in einem Bereich von 9 bis 10 µm liegt, gemessen mit einem Coulter LS130 Laserdiffraktionsgranulometer; eine solche Druckfarbe ermöglicht die Bereitstellung einer "silbernen" Spiegelschicht), b) Trägersubstrat-Schicht (z.B. COC), c) blaue, bevorzugt 1 bis 2 Mikrometer dicke, Farbschicht, d) gelb eingefärbte, "silberne" Spiegelschicht, erhältlich mittels gelb eingefärbter Metallpigmente, die aus der WO 2005/051675 A2 bekannt sind (siehe hierzu die Beschreibung zur Schicht a));
3) die oben unter 1) und 2) genannten Schichtsysteme können selbstverständlich hinsichtlich der gelben Farbschicht und der blauen Farbschicht dahingehend variiert werden, dass anstelle von Gelb bzw. Blau andere Farben verwendet werden, die insbesondere zueinander komplementär sind.

Ein für die erfindungsgemäße Blisterverpackung einsetzbares Kunststofffolienformteil kann z.B. den folgenden mehrschichtigen Aufbau aufweisen:
- Polypropylenschicht, die an ihrer Seite zur folgenden COC-Schicht hin mit einer semitransparenten Funktionsschicht (z.B. Al/SiO_{2/}Al-Schichtfolge oder Ag/SiO₂/ Ag-Schichtfolge, insbesondere mit Gold/Blau-Farbwechsel in Auflicht/Durchlicht-Betrachtung) versehen ist;
- Klebschicht (optional);
- COC-Schicht;
- Klebschicht (optional);
- Polypropylenschicht.

Ein weiteres für die erfindungsgemäße Blisterverpackung einsetzbares Kunststofffolienformteil kann z.B. den folgenden mehrschichtigen Aufbau aufweisen:
- Polypropylenschicht,;
- Klebschicht (optional);
- COC-Schicht, die an ihrer Seite zur folgenden Polypropylen-Schicht hin mit einer semitransparenten Funktionsschicht (z.B. Al/SiO₂/Al-Schichtfolge oder Ag/SiO₂/ Ag-Schichtfolge, insbesondere mit Gold/Blau-Farbwechsel in Auflicht/ Durchlicht-Betrachtung) versehen ist;
- Klebschicht (optional);
- Polypropylenschicht.

Ein weiteres für die erfindungsgemäße Blisterverpackung einsetzbares Kunststofffolienformteil kann z.B. den folgenden mehrschichtigen Aufbau aufweisen:
- Polypropylenschicht;
- Klebschicht (optional);
- gelbe, bevorzugt 1 bis 2 Mikrometer dicke, Farbschicht, die aufgedruckt ist auf eine semitransparente metallische Schicht aus Aluminium, die sich einer COC-Schicht befindet; auf der gegenüberliegenden Seite der COC-Schicht befinden sich in der Reihenfolge eine blaue, bevorzugt 1 bis 2 Mikrometer dicke, Farbschicht, dann eine semitransparente metallische Schicht aus Aluminium und schließlich eine gelbe, bevorzugt 1 bis 2 Mikrometer dicke, Farbschicht;
- Klebschicht (optional);
- Polypropylenschicht.

Ein weiteres für die erfindungsgemäße Blisterverpackung einsetzbares Kunststofffolienformteil kann z.B. den folgenden mehrschichtigen Aufbau aufweisen:
- Polypropylenschicht;
- Klebschicht (optional);
- gelb eingefärbte "silberne" Spiegelschicht, erhältlich mittels gelb eingefärbter Metallpigmente, die aus der WO 2005/051675 A2 bekannt sind und aufgedruckt sind auf einer COC-Schicht; auf der gegenüberliegenden Seite der COC-Schicht befinden sich in der Reihenfolge eine blaue, bevorzugt 1 bis 2 Mikrometer dicke, Farbschicht und danach eine gelb eingefärbte, "silberne" Spiegelschicht, erhältlich mittels gelb eingefärbter Metallpigmente, die aus der WO 2005/051675 A2 bekannt sind;

- Klebschicht (optional);
- Polypropylenschicht.

Für das Versiegeln des Kunststofffolienformteils mit der Abdeckfolie kann die Abdeckfolie insbesondere eine Heißsiegelbeschichtung aufweisen, z.B. ein Heißsiegelbindemittel (hierin auch Heißsiegellack genannt), das mittels eines gegebenenfalls vorhandenen Haftvermittlers (hierin auch Heißsiegellackgrundierung genannt) auf der Abdeckfolie angeordnet ist. Für Arzneimittel-Blisterverpackungen geeignet ist z.B. eine Kombination aus einem PVC-basierten Haftvermittler und dem kommerziell von der Firma Evonik erhältlichen Heißsiegelbindemittel mit dem Handelsnamen "DEGALAN® P24". Für Arzneimittel-Blisterverpackungen geeignet ist z.B. auch das auf heißsiegelfähigen Perlpolymeren basierende, kommerziell von der Firma Evonik erhältliche Heißsiegelbindemittel mit dem Handelsnamen "DEGALAN® VP P34", für das eine vorangehende Grundierung mit einem Haftvermittler nicht erforderlich ist.

Eine für die erfindungsgemäße Blisterverpackung einsetzbare Abdeckfolie kann z.B. eine Dicke im Bereich von 5 Mikrometer bis 100 Mikrometer, bevorzugt von 5 Mikrometer bis 60 Mikrometer, weiter bevorzugt im Bereich von 10 Mikrometer bis 30 Mikrometer, insbesondere bevorzugt im Bereich von 15 Mikrometer bis 25 Mikrometer aufweisen.

Die Abdeckfolie ist insbesondere eine Durchdrückfolie für eine Durchdrückverpackung, bei der die Durchdrückfolie das Verpackungsgut (z.B. pharmazeutische Erzeugnisse wie etwa Tabletten) abschließt, aber durch das Durchdrücken des Verpackungsgutes aufreißbar oder aufbrechbar ist. Die Fähigkeit des Aufbrechens kann durch mechanische Einwirkung, z.B. mittels Perforationen und/oder Schneidrillen und/oder verdünnte Bereiche in der Abdeckfolie (die z.B. mittels Prägen erhältlich sind), zusätzlich gesteigert werden. Die Abdeckfolie ist bevorzugt opak, es eignen sich aber auch transparente oder semitransparente Abdeckfolien. Die Abdeckfolie basiert insbesondere auf einem der folgenden Materialien:
- insbesondere zur Herstellung opaker Abdeckfolien geeignet: Aluminium, insbesondere Hart-Aluminium, Weich-Aluminium, Papier-Aluminium-Kombination oder Papier-Polyester-Aluminium-Laminat; Aluminium wird insbesondere im Falle einer opaken Abdeckfolie bevorzugt;
- Polyolefinharz; insbesondere Polypropylen oder einen anorganischen Füllstoff aufweisendes Polypropylen, wobei der anorganische Füllstoff z.B. Calciumcarbonat, Talkum, Aluminiumoxid, Titandioxid, Diatomeenerde, Ton, Kaolin, Kreide, Glasfaser oder ein Gemisch zweier oder mehrerer der vorstehend genannten Stoffe ist (je nach Füllstoff-Gehalt können insbesondere semitransparente oder transparente Abdeckfolien erhalten werden);
- insbesondere zur Herstellung transparenter Abdeckfolien geeignet: Cycloolefin-Copolymer (COC) oder Cycloolefin-Polymer (COP); oder Filme, die wenigstens eine Schicht aus Cycloolefin-Copolymer (COC) oder Cycloolefin-Polymer (COP) enthalten, z.B. Filme mit dem Aufbau COC/PE/COC oder COC/PE-LLD/COC oder ein Film mit einer COC-Kernschicht (z.B. die folgende Schichtenfolge: polymere Thermoschutzschicht (bevorzugt gewählt von COC, COP, PP, PA oder PET) - COC-Kernschicht - polymere Heißsiegelschicht), beschrieben in der WO 2009/000403 A1 oder in der WO 2010/139409 A1;
- orientiertes Polyethylenterephthalat (OPET); oder ein OPET-Film, der mit einer Polyethylenschicht oder einer Polypropylenschicht zu einem Laminat kombiniert ist, wobei das Laminat gegebenenfalls Schneidrillen bzw. Einschnitte aufweisen kann;
- insbesondere zur Herstellung transparenter Abdeckfolien geeignet: Polyolefin (A) enthaltende Polymerphase, in der eine Kohlenwasserstoffharz-Komponente (B) in gelöster Form enthalten ist, wobei die Kohlenwasserstoffharz-Komponente (B) von dem Polyolefin (A) verschieden ist, zyklische Seitengruppen an der Polymerkette umfasst und mit einem Anteil von mindestens 3 Gew.-% an der Gesamtmasse im Trägersubstrat enthalten ist, wobei das mittlere Molekulargewicht der Kohlenwasserstoffharz-Komponente (B) kleiner oder gleich 10 000 ist; als Polyolefin (A) werden Polyethylen, Polypropylen oder ein Copolymer oder Terpolymer von Ethylen und/ oder Propylen bevorzugt; Komponente (B) ist insbesondere ein amorphes Polymer; solche Durchdrückfolien sind aus der DE 196 13 960 A1 bekannt;
- insbesondere zur Herstellung transparenter Abdeckfolien geeignet: einaxial orientierter Polypropylenfilm, bestrahlt mit ionisierender Strahlung.

Weitere Ausführungsbeispiele sowie Vorteile der Erfindung werden nachfolgend anhand der schematisch stark vereinfachten Figuren erläutert, bei deren Darstellung auf eine maßstabs- und proportionsgetreue Wiedergabe verzichtet wurde, um die Anschaulichkeit zu erhöhen.

Es zeigen:
- Figuren 1 bis 4: eine erfindungsgemäße Blisterverpackung gemäß einem ersten bis siebten Ausführungsbeispiel;
- Figuren 5 bis 9: eine erfindungsgemäße Blisterverpackung gemäß einem achten Ausführungsbeispiel; und
- Figuren 10 bis 15: eine erfindungsgemäße Blisterverpackung gemäß einem neunten Ausführungsbeispiel.

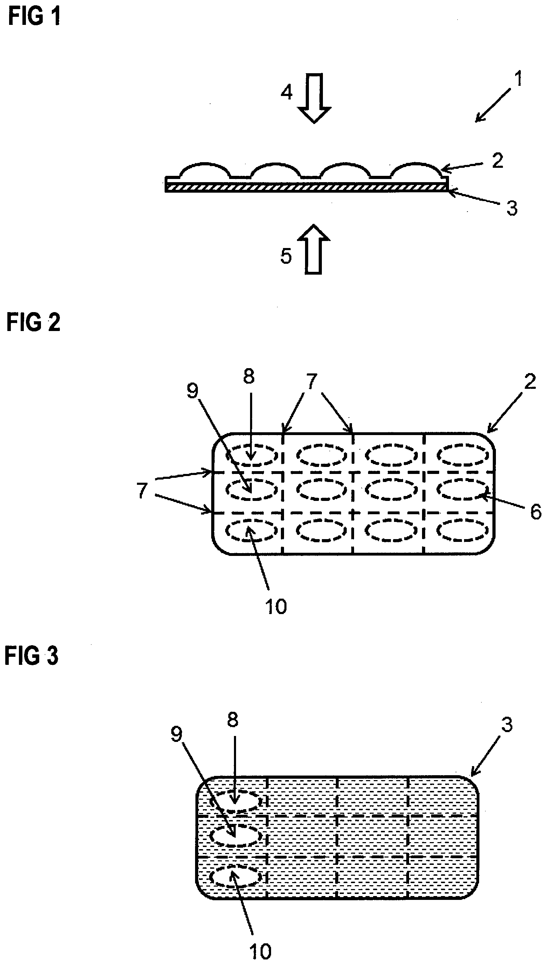

Figuren 1 bis 4 veranschaulichen die Funktionsweise einer erfindungsgemäßen Blisterverpackung gemäß einem ersten bis siebten Ausführungsbeispiel, wobei die Abdeckfolie jeweils opak ist. Die Blisterverpackung wird im vorliegenden Beispiel anhand eines Tablettenblisters beschrieben.

### Erstes Ausführungsbeispiel:

Figur 1 zeigt einen Tablettenblister 1, der ein Kunststofffolienformteil 2 und eine opake Abdeckfolie 3 umfasst. Der Blockpfeil 4 symbolisiert die Betrachtung des Tablettenblisters 1 von der Vorderseite her, der Blockpfeil 5 symbolisiert die Betrachtung des Tablettenblisters 1 von der Rückseite her. Die opake Abdeckfolie 3 basiert auf einer mit einer Heißsiegelbeschichtung versehenen Aluminiumfolie mit einer Dicke von 20 Mikrometer. Das Kunststofffolienformteil 2 beruht auf einer thermogeformten Kunststofffolie, deren Gesamtdicke 250 Mikrometer beträgt und die den folgenden Aufbau aufweist:
- Polypropylenschicht;
- semitransparente Funktionsschicht (20nm Ag / 240nm SiO₂ / 20 nm Ag) mit Gold/Blau-Farbwechsel in Auflicht/Durchlicht-Betrachtung, die mittels Aufdampfen auf die vorangehende Polypropylenschicht erhältlich ist;
- Klebschicht;
- COC-Schicht mit einer Dicke von 75 Mikrometer;
- Klebschicht;
- Polypropylenschicht.

Figur 2 zeigt die Vorderseite des Tablettenblisters 1, nämlich das Kunststofffolienformteil 2, bei der Betrachtung im Auflicht. Der Betrachter nimmt das Kunststofffolienformteil 2 in Gestalt einer homogenen, goldfarbenen Metallisierung wahr. Mit der Bezugsnummer 6 sind in gestrichelter Form die Kavitäten (bzw. Blasen oder Vertiefungen) im Kunststofffolienformteil 2 angedeutet. Mit der Bezugsnummer 7 sind ggf. vorhandene Perforationen dargestellt. Aus dem Tablettenblister 1 hat der Verbraucher bereits die drei linken, ursprünglich in den Kavitäten 8, 9 und 10 vorhandenen Tabletten herausgenommen. Mithin sind nur noch neun Tabletten vorhanden, die in den restlichen Kavitäten vorliegen.

Figur 3 zeigt die Rückseite des Tablettenblisters 1, nämlich die opake, auf Aluminium basierende Abdeckfolie 3. Im Bereich der Kavitäten 8, 9 und 10 des Tablettenblisters 1 hat der Verbraucher die Tabletten inklusive der Abdeckfolie 3 entfernt. Im Bereich der Kavitäten 8, 9 und 10 ist das Kunststofffolienformteil 2 somit für den Betrachter sichtbar.

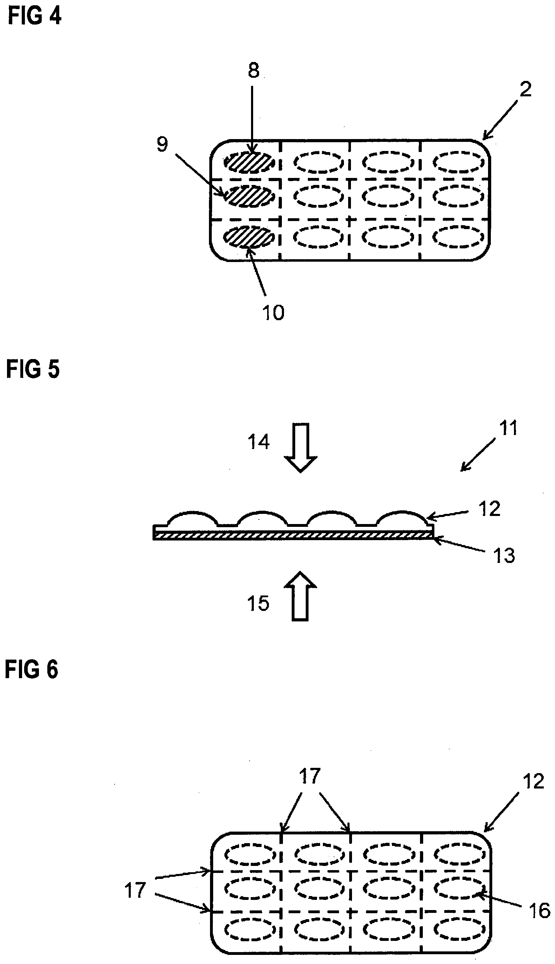

Figur 4 zeigt die Vorderseite der Tablettenblisters 1, nämlich das Kunststofffolienformteil 2, bei der Betrachtung im Durchlicht. Der Betrachter nimmt den Bereich der Kavitäten 8, 9 und 10, in denen keine Tabletten und keine Abdeckfolie 3 vorhanden sind, in hellem Blau wahr. Der Rest des Kunststofffolienformteils 2 erscheint dem Betrachter homogen in Form einer goldenen, metallischen Fläche.

### Zweites Ausführungsbeispiel:

Das zweite Ausführungsbeispiel ist an das erste Ausführungsbeispiel angelehnt. Das Kunststofffolienformteil beruht auf einer thermogeformten Kunststofffolie, deren Gesamtdicke 250 Mikrometer beträgt und die den folgenden Aufbau aufweist:
- Polypropylenschicht;
- Klebschicht;
- semitransparente Funktionsschicht (20nm Ag / 240nm SiO₂ / 20 nm Ag) mit Gold/ Blau-Farbwechsel in Auflicht/ Durchlicht-Betrachtung, die mittels Aufdampfen auf die nachfolgende COC-Schicht erhältlich ist;
- COC-Schicht mit einer Dicke von 75 Mikrometer;
- Klebschicht;
- Polypropylenschicht.

### Drittes Ausführungsbeispiel:

Das dritte Ausführungsbeispiel ist an das erste Ausführungsbeispiel angelehnt. Das Kunststofffolienformteil wurde dahingehend variiert, dass die thermogeformte Kunststofffolie eine Gesamtdicke von 250 Mikrometer aufweist und die COC-Kernschicht des PP/COC/PP-Aufbaus eine Dicke von 190 Mikrometer aufweist.

### Viertes Ausführungsbeispiel:

Das vierte Ausführungsbeispiel ist an das zweite Ausführungsbeispiel angelehnt. Das Kunststofffolienformteil wurde dahingehend variiert, dass die thermogeformte Kunststofffolie eine Gesamtdicke von 250 Mikrometer aufweist und die COC-Kernschicht des PP/COC/PP-Aufbaus eine Dicke von 190 Mikrometer aufweist.

### Fünftes Ausführungsbeispiel:

Das fünfte Ausführungsbeispiel ist an das erste Ausführungsbeispiel angelehnt. Das Kunststofffolienformteil wurde dahingehend variiert, dass die thermogeformte Kunststofffolie eine Gesamtdicke von 250 Mikrometer aufweist und die COC-Kernschicht des PP/COC/PP-Aufbaus eine Dicke von 125 Mikrometer aufweist.

### Sechstes Ausführungsbeispiel:

Das sechste Ausführungsbeispiel ist an das zweite Ausführungsbeispiel angelehnt. Das Kunststofffolienformteil wurde dahingehend variiert, dass die thermogeformte Kunststofffolie eine Gesamtdicke von 250 Mikrometer aufweist und die COC-Kernschicht des PP/COC/PP-Aufbaus eine Dicke von 125 Mikrometer aufweist.

### Siebtes Ausführungsbeispiel

Das siebte Ausführungsbeispiel ist an das erste Ausführungsbeispiel angelehnt. Das Kunststofffolienformteil beruht auf einer thermogeformten Kunststofffolie, die den folgenden Aufbau aufweist:
- Polypropylenschicht mit einer Dicke von 250 Mikrometer;
- semitransparente Funktionsschicht (20nm Ag / 240nm SiO₂ / 20 nm Ag) mit Gold/Blau-Farbwechsel in Auflicht/ Durchlicht-Betrachtung, die mittels Aufdampfen auf die vorangehende Polypropylenschicht erhältlich ist;
- optional vorhandene polymere Thermoschutzschicht, die z.B. von der Gruppe bestehend aus COC, COP, Polypropylen, Polyamid und Polyethylenterephthalat gewählt ist.

### Achtes Ausführungsbeispiel:

Figuren 5 bis 9 veranschaulichen die Funktionsweise einer erfindungsgemäßen Blisterverpackung gemäß einem achten Ausführungsbeispiel, wobei die Abdeckfolie transparent ist.

Figur 5 zeigt einen Tablettenblister 11, der ein Kunststofffolienformteil 12 und eine transparente Abdeckfolie 13 umfasst. Der Blockpfeil 14 symbolisiert die Betrachtung des Tablettenblisters 11 von der Vorderseite her, der Blockpfeil 15 symbolisiert die Betrachtung des Tablettenblisters 11 von der Rückseite her. Die transparente Abdeckfolie 13 basiert auf einer mit einer Heißsiegelbeschichtung versehenen COC-Folie, beispielsweise beschrieben in der WO 2009/000403 A1 oder in der WO 2010/139409 A1. Das Kunststofffolienformteil 12 beruht auf einer thermogeformten Kunststofffolie, deren Gesamtdicke 250 Mikrometer beträgt und die den folgenden Aufbau aufweist:
- Polypropylenschicht;
- semitransparente Funktionsschicht (20nm Ag / 240nm SiO₂ / 20 nm Ag) mit Gold/Blau-Farbwechsel in Auflicht/Durchlicht-Betrachtung, die mittels Aufdampfen auf die vorangehende Polypropylenschicht erhältlich ist;
- Klebschicht;
- COC-Schicht mit einer Dicke von 75 Mikrometer;
- Klebschicht;
- Polypropylenschicht.

Figur 6 zeigt die Vorderseite des Tablettenblisters 11, nämlich das Kunststofffolienformteil 12, bei der Betrachtung im Auflicht. Der Betrachter nimmt das Kunststofffolienformteil 12 in Gestalt einer homogenen, goldfarbenen Metallisierung wahr. Mit der Bezugsnummer 16 sind in gestrichelter Form die Kavitäten (bzw. Blasen oder Vertiefungen) im Kunststofffolienformteil 12 angedeutet. Mit der Bezugsnummer 17 sind ggf. vorhandene Perforationen dargestellt. Aus dem Tablettenblister 11 hat der Verbraucher noch keine Tabletten herausgenommen, d.h. sämtliche Kavitäten 16 sind mit Tabletten gefüllt.

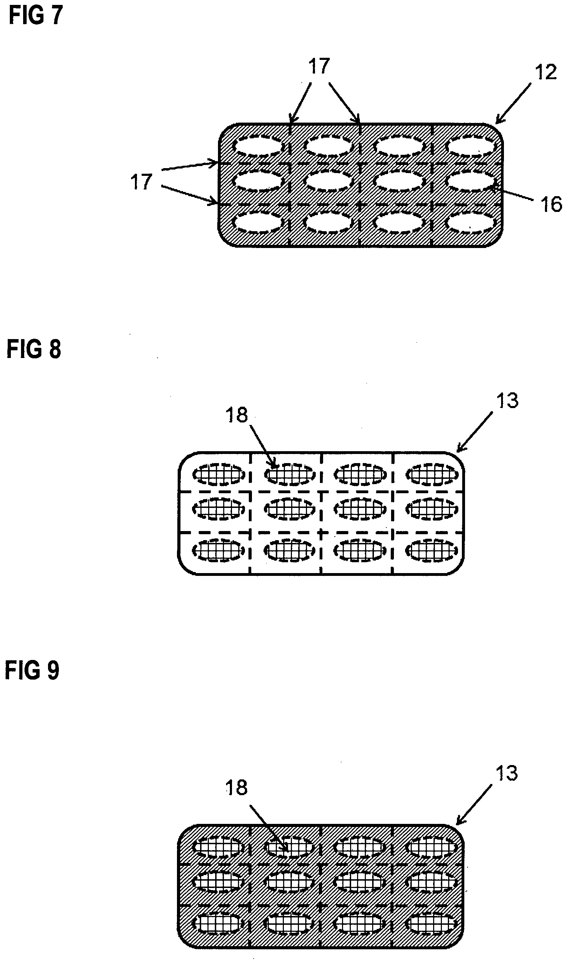

Figur 7 zeigt die Vorderseite des Tablettenblisters 11, nämlich das Kunststofffolienformteil 12, bei der Betrachtung im Durchlicht. Der Betrachter nimmt den Bereich der Kavitäten 16, in denen Tabletten vorhanden sind, in Gestalt einer homogenen, goldfarbenen Metallisierung wahr. Den restlichen, schraffiert dargestellten Bereich des Kunststofffolienformteils 12 nimmt der Betrachter in hellem Blau wahr.

Figur 8 zeigt die Rückseite des Tablettenblisters 11, nämlich die transparente, auf Cycloolefin-Copolymer (COC) basierende Abdeckfolie 13 bei der Betrachtung im Auflicht. Sämtliche Kavitäten 16 des Tablettenblisters 11 sind mit Tabletten 18 gefüllt. Die Tabletten 18 sind für den Betrachter durch die transparente Abdeckfolie 13 hindurch sichtbar. Durch die transparente Abdeckfolie 13 hindurch sichtbar ist darüber hinaus das Kunststofffolienformteil 12 in Gestalt einer homogenen, goldfarbenen Metallisierung.

Figur 9 zeigt die Rückseite des Tablettenblisters 11, nämlich die transparente, auf Cycloolefin-Copolymer (COC) basierende Abdeckfolie 13 bei der Betrachtung im Durchlicht. Sämtliche Kavitäten 16 des Tablettenblisters 11 sind mit Tabletten 18 gefüllt. Die Tabletten 18 sind für den Betrachter durch die transparente Abdeckfolie 13 hindurch sichtbar. Durch die transparente Abdeckfolie 13 hindurch wahrnehmbar ist darüber hinaus das Kunststofffolienformteil 12 in heller, blauer Farbe.

### Neuntes Ausführungsbeispiel:

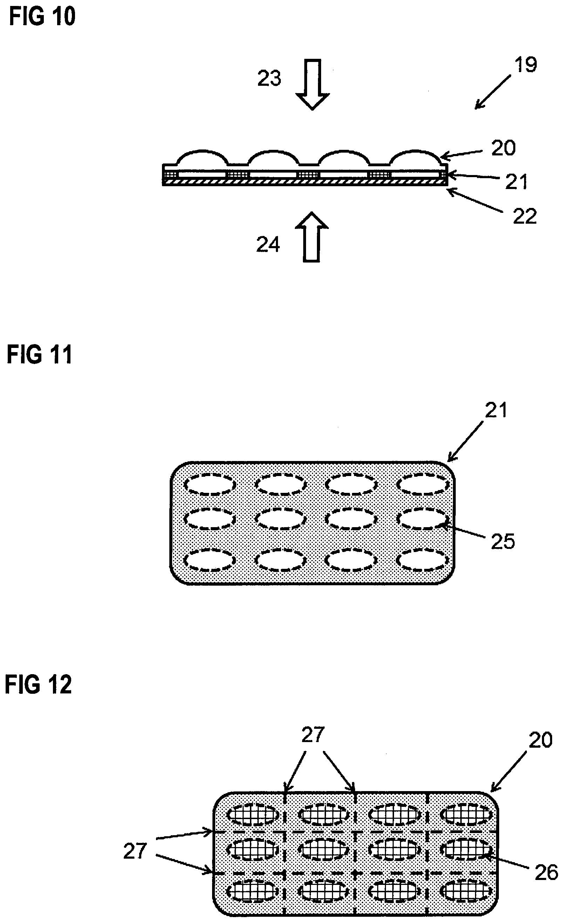

Figuren 10 bis 15 veranschaulichen die Funktionsweise einer erfindungsgemäßen Blisterverpackung gemäß einem neunten Ausführungsbeispiel, wobei die Abdeckfolie transparent ist und das Kunststofffolienformteil ein herkömmliches, transparentes Kunststofffolienformteil ist. Zwischen der Abdeckfolie und dem Kunststofffolienformteil befindet sich als Zwischenlage ein transparentes Trägersubstrat, das mit einer semitransparenten Funktionsschicht versehen ist. Die Zwischenlage weist Aussparungen auf, die mit den Kavitäten des Kunststofffolienformteils deckungsgleich sind. Sämtliche Kavitäten des Tablettenblisters sind mit Tabletten gefüllt.

Figur 10 zeigt einen Tablettenblister 19, der ein transparentes, konventionelles Kunststofffolienformteil 20 und eine transparente Abdeckfolie 22 umfasst. Der Blockpfeil 23 symbolisiert die Betrachtung des Tablettenblisters 19 von der Vorderseite her, der Blockpfeil 24 symbolisiert die Betrachtung des Tablettenblisters 19 von der Rückseite her. Die transparente Abdeckfolie 22 basiert auf einer mit einer Heißsiegelbeschichtung versehenen COC-Folie, beispielsweise beschrieben in der WO 2009/000403 A1 oder in der WO 2010/139409 A1. Das Kunststofffolienformteil 20 ist z.B. eine kommerziell erhältliche thermogeformte Kunststofffolie, deren Gesamtdicke 250 Mikrometer beträgt und die den folgenden Aufbau aufweist:
- Polypropylenschicht;
- Klebschicht;
- COC-Schicht mit einer Dicke von 75 Mikrometer;
- Klebschicht;
- Polypropylenschicht.

Die Zwischenlage 21 beruht auf einem transparenten Trägersubstrat, nämlich einer Polyethylenterephthalat-Folie, die mit einer semitransparenten Funktionsschicht (20nm Ag / 240nm SiO₂ / 20 nm Ag) mit Gold/Blau-Farbwechsel in Auflicht/Durchlicht-Betrachtung versehen ist. Die semitransparente Funktionsschicht ist mittels Aufdampfen auf die Polyethylenterephthalat-Folie erhältlich. Die Zwischenlage 21 weist Aussparungen auf, die mit den Kavitäten des Kunststofffolienformteils 20 deckungsgleich sind. Die Zwischenlage 21 ist mittels (Heißsiegel-)Klebschichten mit dem Kunststofffolienformteil 20 einerseits und der Abdeckfolie 22 andererseits verklebt.

Figur 11 zeigt die Gestalt der Zwischenlage 21 in Draufsicht. Die Zwischenlage 21 weist z.B. mittels Stanzen oder durch Laser-Schnitt erhältliche Aussparungen 25 auf, die mit den Kavitäten des Kunststofffolienformteils 20 deckungsgleich sind. Die Zwischenlage 21 erscheint dem Betrachter bei der Betrachtung im Auflicht in metallischem Gold, bei der Betrachtung im Durchlicht in hellem Blau.

Figur 12 zeigt die Vorderseite des Tablettenblisters 19, nämlich das Kunststofffolienformteil 20, bei der Betrachtung im Auflicht. Mit der Bezugsnummer 27 sind ggf. vorhandene Perforationen dargestellt. Die gestrichelt dargestellten Ellipsen veranschaulichen die Kavitäten (bzw. Blasen oder Vertiefungen) im Kunststofffolienformteil 20. Infolge des transparenten Kunststofffolienformteils 20, der transparenten Abdeckfolie 22 und der Aussparungen 25 in der Zwischenlage 21 sind die Tabletten 26 für den Betrachter sichtbar. Der Hintergrund der Tabletten 26 erscheint dem Betrachter in Gestalt einer homogenen, goldfarbenen Metallisierung.

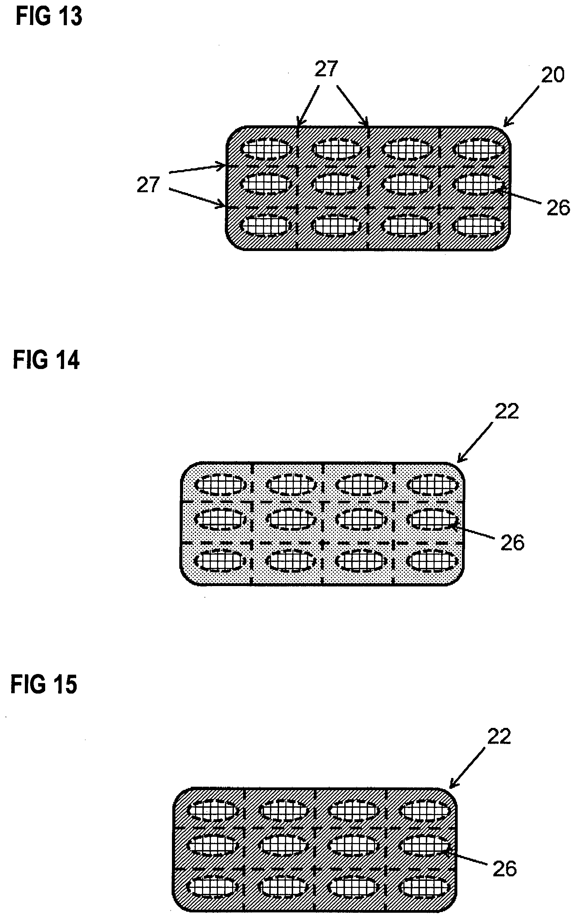

Figur 13 zeigt die Vorderseite des Tablettenblisters 19, nämlich das Kunststofffolienformteil 20, bei der Betrachtung im Durchlicht. Infolge des transparenten Kunststofffolienformteils 20, der transparenten Abdeckfolie 22 und der Aussparungen 25 in der Zwischenlage 21 sind die Tabletten 26 für den Betrachter sichtbar. Den schraffiert dargestellten Hintergrund der Tabletten 26 nimmt der Betrachter in hellem Blau wahr.

Figur 14 zeigt die Rückseite des Tablettenblisters 19, nämlich die transparente, auf Cycloolefin-Copolymer (COC) basierende Abdeckfolie 22 bei der Betrachtung im Auflicht. Infolge des transparenten Kunststofffolienformteils 20, der transparenten Abdeckfolie 22 und der Aussparungen 25 in der Zwischenlage 21 sind die Tabletten 26 für den Betrachter sichtbar. Der Hintergrund der Tabletten 26 erscheint dem Betrachter in Gestalt einer homogenen, goldfarbenen Metallisierung.

Figur 15 zeigt die Rückseite des Tablettenblisters 19, nämlich die transparente, auf Cycloolefin-Copolymer (COC) basierende Abdeckfolie 22 bei der Betrachtung im Durchlicht. Infolge des transparenten Kunststofffolienformteils 20, der transparenten Abdeckfolie 22 und der Aussparungen 25 in der Zwischenlage 21 sind die Tabletten 26 für den Betrachter sichtbar. Der Hintergrund der Tabletten 26 erscheint dem Betrachter in hellem Blau.

## Patentansprüche

1. Kunststofffolienformteil (2, 12, 20) für einen Blister (1,11,19), insbesondere einen Tablettenblister, **dadurch gekennzeichnet, dass** das Kunststofffolienformteil (2, 12, 20) umfasst: ein eine semitransparente Funktionsschicht aufweisendes transparentes Trägersubstrat, wobei die semitransparente Funktionsschicht so beschaffen ist, dass das Kunststofffolienformteil (2, 12, 20) bei der Betrachtung im Auflicht eine erste, visuell erkennbare Farbe aufweist und bei der Betrachtung im Durchlicht eine zweite, visuell erkennbare Farbe aufweist.

2. Kunststofffolienformteil nach Anspruch 1, wobei die semitransparente Funktionsschicht lediglich in einem Teilbereich oder in mehreren Teilbereichen des Kunststofffolienformteils (2, 12, 20) vorliegt.

3. Kunststofffolienformteil nach Anspruch 2, wobei die semitransparente Funktionsschicht Aussparungen aufweist, die mit Kavitäten (6, 16) des Kunststofffolienformteils (2, 12, 20) deckungsgleich sind.

4. Kunststofffolienformteil (2, 12, 20) nach Anspruch 1, wobei das Kunststofffolienformteil (2, 12, 20) so beschaffen ist, dass im Falle des Vorhandenseins verpackter Gegenstände, z.B. Tabletten, und des Vorhandenseins einer das Kunststofffolienformteil (2, 12, 20) verschließenden opaken Abdeckfolie (3, 13) ein vom Verbraucher entnommener verpackter Gegenstand anhand des Fehlens der opaken Abdeckfolie (3, 13) im Bereich des entnommenen Gegenstandes bei der Betrachtung des Kunststofffolienformteils (2, 12, 20) von der der Abdeckfolie (3, 13) entgegengesetzten Seite her im Durchlicht in Form eines durch die erste, visuell erkennbare Farbe und die zweite, visuell erkennbare Farbe gebildeten Motivs erkennbar ist.

5. Kunststofffolienformteil (2, 12, 20) nach einem der Ansprüche 1 bis 4, wobei die semitransparente Funktionsschicht einen mehrschichtigen Aufbau mit zwei semitransparenten metallischen Schichten und einer zwischen den zwei semitransparenten metallischen Schichten angeordneten dielektrischen Schicht aufweist.

6. Kunststofffolienformteil (2, 12, 20) nach Anspruch 5, wobei die beiden semitransparenten metallischen Schichten unabhängig voneinander aus einem Metall gebildet sind und das Metall jeweils von der Gruppe bestehend aus Al, Ag, Ni, Cr, Cu, Au und einer Legierung eines oder mehrerer der vorstehend genannten Elemente gewählt ist und die dielektrische Schicht eine SiO₂-Schicht, eine ZnO-Schicht, eine Al₂O₃-Schicht eine TiO₂-Schicht, eine Schicht aus einem Nitrid oder Oxynitrid eines der Elemente Si, Zn, Al oder Ti oder eine MgF₂-Schicht oder eine, z.B. drucktechnisch erhältliche, Nitrocellulose-Schicht ist.

7. Kunststofffolienformteil (2, 12, 20) nach Anspruch 6, wobei die beiden semitransparenten metallischen Schichten von Al oder Ag gewählt sind und die dielektrische Schicht eine SiO₂-Schicht ist.

8. Kunststofffolienformteil (2, 12, 20) nach einem der Ansprüche 5 bis 7, wobei das Kunststofffolienformteil (2, 12, 20) bei der Betrachtung im Auflicht goldfarben erscheint und bei der Betrachtung im Durchlicht einen blauen Farbton aufweist.

9. Kunststofffolienformteil (2, 12, 20) nach einem der Ansprüche 1 bis 4, wobei die semitransparente Funktionsschicht drucktechnisch mittels einer Effektpigment-Zusammensetzung erhältlich ist.

10. Kunststofffolienformteil (2, 12, 20) nach einem der Ansprüche 1 bis 9, wobei das transparente Trägersubstrat des Kunststofffolienformteils (2, 12, 20) auf einer Mehrschichtanordnung mit zumindest zwei Schichten basiert und die semitransparente Funktionsschicht zwischen den beiden Schichten angeordnet ist, oder das transparente Trägersubstrat des Kunststofffolienformteils (2, 12, 20) auf einer Mehrschichtanordnung mit zumindest einer inneren Schicht und zwei Deckschichten basiert und die semitransparente Funktionsschicht zwischen der inneren Schicht und einer der beiden Deckschichten angeordnet ist, wobei die Mehrschichtanordnung bevorzugt von der Gruppe der folgenden Elemente gewählt ist:
- PVC/PVDC-Mehrschichtanordnung,
- PVC/ PE/ PVDC-Mehrschichtanordnung,
- PVC/ ACLAR®-Mehrschichtanordnung,
- COC/COC-Mehrschichtanordnung,
- PP/ COC/PP-Mehrschichtanordnung,
- PP/COC/EVOH/PP-Mehrschichtanordnung,
- PETG/COC/PETG-Mehrschichtanordnung,
- PVC/COC/PVC-Mehrschichtanordnung,
- mit PVDC beschichtetes COC,
- PETG/ PCTFE-Mehrschichtanordnung,
- PETG/ EVOH/ PCTFE-Mehrschichtanordnung,
- PVC/ PCTFE-Mehrschichtanordnung,
- PVC/ PE/ PCTFE-Mehrschichtanordnung,
- PVC/PCTFE/PVC-Mehrschichtanordnung, und
- PVC/ EVOH/ PCTFE-Mehrschichtanordnung.

11. Kunststofffolienformteil (2, 12, 20) nach Anspruch 10, wobei das transparente Trägersubstrat des Kunststofffolienformteils (2, 12, 20) auf einer Mehrschichtanordnung mit zumindest einer inneren Schicht und zwei Deckschichten basiert und die semitransparente Funktionsschicht zwischen der inneren Schicht und einer der beiden Deckschichten angeordnet ist, wobei die innere Schicht eine COC-Schicht ist und die beiden Deckschichten jeweils eine PP-Schicht sind.

12. Blister bzw. Blisterverpackung (1, 11, 19), insbesondere Tablettenblister, umfassend ein Kunststofffolienformteil (2, 12, 20) nach einem der Ansprüche 1 bis 11 und eine bevorzugt opake Abdeckfolie (3, 13), wobei das Kunststofffolienformteil (2, 12, 20) die Vorderseite des Blisters (1, 11, 19) definiert und die Abdeckfolie (3, 13) die Rückseite des Blisters (1, 11, 19) definiert.

13. Blister (1, 11, 19) nach Anspruch 12, wobei die Abdeckfolie (3, 13) opak ist und der Blister (1, 11, 19) so beschaffen ist, dass der Bereich eines vom Verbraucher aus dem Blister (1, 11, 19) entnommenen verpackten Gegenstandes, z.B. eine Tablette, infolge des in diesem Bereich nicht mehr vorhandenen Teils der opaken Abdeckfolie (3, 13) bei der Betrachtung der Vorderseite des Blisters (1, 11, 19) im Durchlicht in Form eines durch die erste, visuell erkennbare Farbe und die zweite, visuell erkennbare Farbe gebildeten Motivs erkennbar ist.

14. Blister (1, 11, 19) nach einem der Ansprüche 12 oder 13, wobei der Blister ein Blister für Pharmaerzeugnisse, bevorzugt eine Tablettenverpackung bzw. ein Tablettenblister ist.

15. Verfahren zum Herstellen eines Kunststofffolienformteils (2, 12, 20) nach einem der Ansprüche 1 bis 11, umfassend
a) den Schritt des Bereitstellens eines transparenten Trägersubstrats;
b) den Schritt des Formens des transparenten Trägersubstrats, bevorzugt mittels Thermoformen; und
c) den Schritt des Versehens des geformten transparenten Trägersubstrats mit einer semitransparenten Funktionsschicht.

16. Verfahren nach Anspruch 15, wobei die semitransparente Funktionsschicht im Schritt c) mittels Aufdampfen oder drucktechnisch aufgebracht wird.

17. Verfahren nach Anspruch 15, wobei der Schritt c) so erfolgt, dass
c1) ein separates transparentes Trägersubstrat, das eine semitransparente Funktionsschicht aufweist, bereitgestellt wird; und
c2) das die semitransparente Funktionsschicht aufweisende separate transparente Trägersubstrat auf das geformte transparente Trägersubstrat aufgebracht wird, z.B. mittels HPF (High-Pressure-Forming-Verfahren) oder mittels einer Klebschicht.

18. Verfahren zum Herstellen eines Kunststofffolienformteils (2, 12, 20) nach einem der Ansprüche 1 bis 11, umfassend
a) den Schritt des Bereitstellens eines transparenten Trägersubstrats; oder, im Falle, dass das transparente Trägersubstrat auf einer Mehrschichtanordnung basiert, den Schritt des Bereitstellens zumindest einer Schicht der das transparente Trägersubstrat bildenden Mehrschichtanordnung;
b) das Versehen des transparenten Trägersubstrats mit einer semitransparenten Funktionsschicht; oder, im Falle, dass das transparente Trägersubstrat auf einer Mehrschichtanordnung basiert, das Versehen der zumindest einen Schicht der das transparente Trägersubstrat bildenden Mehrschichtanordnung mit einer semitransparenten Funktionsschicht;
c) den Schritt des Formens des nach dem Schritt b) erhaltenen, die semitranstransparente Funktionsschicht aufweisenden transparenten Trägersubstrats, bevorzugt mittels Thermoformen.

19. Verfahren nach Anspruch 18, wobei die semitransparente Funktionsschicht im Schritt b) mittels Aufdampfen oder drucktechnisch aufgebracht wird.

## Claims

1. A plastic foil molded part (2, 12, 20) for a blister (1, 11, 19), in particular for a tablet blister, **characterized in that** the plastic foil molded part (2, 12, 20) comprises: a transparent carrier substrate having a semitransparent function layer, wherein the semitransparent function layer is constituted such that the plastic foil molded part (2, 12, 20) has a first, visually recognizable color upon viewing in incident light and has a second, visually recognizable color upon viewing in transmitted light.

2. The plastic foil molded part according to claim 1, wherein the semitransparent function layer is present merely in a partial area or in several partial areas of the plastic foil molded part (2, 12, 20).

3. The plastic foil molded part according to claim 2, wherein the semitransparent function layer has recesses which are congruent with cavities (6, 16) of the plastic foil molded part (2, 12, 20).

4. The plastic foil molded part (2, 12, 20) according to claim 1, wherein the plastic foil molded part (2, 12, 20) is constituted such that in the case of the presence of packaged objects, e.g., tablets, and the presence of an opaque cover foil (3, 13) closing the plastic foil molded part (2, 12, 20), a packaged object removed by the consumer is recognizable in the form of a motif formed by the first, visually recognizable color and the second, visually recognizable color upon viewing the plastic foil molded part (2, 12, 20) from the side opposi ng the cover foil (3, 13) in transmitted light due to the absence of the opaque cover foil (3, 13) in the region of the removed object.

5. The plastic foil molded part (2, 12, 20) according to any of claims 1 to 4, wherein the semitransparent function layer has a multi-layer structure with two semitransparent metallic layers and a dielectric layer arranged between the two semitransparent metallic layers.

6. The plastic foil molded part (2, 12, 20) accordi ng to claim 5, wherein the two semitransparent metallic layers are formed independently of each other from a metal and the metal is respectively chosen from the group consisting of Al, Ag, Ni, Cr, Cu, Au and an alloy of one or several of the hereinabove mentioned elements and the dielectric layer is an SiO₂ layer, aZnO layer, an Al₂O₃ layer, a TiO₂ layer, a layer made of a nitride or oxynitride of one of the elements Si, Zn, Al or Ti, or an MgF₂ layer, or a nitrocellulose layer obtainable, e.g., by printing technology.

7. The plastic foil molded part (2, 12, 20) accordi ng to claim 6, wherein the two semitransparent metallic layers are chosen from Al or Ag and the dielectric layer is an SiO₂ layer.

8. The plastic foil molded part (2, 12, 20) according to any of claims 5 to 7, wherein the plastic foil molded part (2, 12, 20) appears golden upon viewing in incident light and has a blue color tone upon viewing in transmitted light.

9. The plastic foil molded part (2, 12, 20) according to any of claims 1 to 4, wherein the semitransparent function layer is obtainable by printing technology by means of an effect pigment composition.

10. The plastic foil molded part (2, 12, 20) according to any of claims 1 to 9, wherein the transparent carrier substrate of the plastic foil molded part (2, 12, 20) is based on a multi-layer arrangement with at least two layers and the semitransparent function layer is arranged between the two layers, or the transparent carrier substrate of the plastic foil molded part (2, 12, 20) is based on a multi-layer arrangement with at least one interior layer and two cover layers and the semitransparent function layer is arranged between the interior layer and one of the two cover layers, wherein the multi-layer arrangement is chosen preferably from the group of the following elements:
- PVC/PVDC multi-layer arrangement,
- PVC/PE/PVDC multi-layer arrangement,
- PVC/ACLAR÷ multi-layer arrangement,
- COC/COC multi-layer arrangement,
- PP/COC/PP multi-layer arrangement,
- PP/COC/EVOH/PP multi-layer arrangement,
- PETG/COC/PETG multi-layer arrangement,
- PVC/COC/PVC multi-layer arrangement,
- COC coated with PV DC,
- PETG/PCTFE multi-layer arrangement,
- PETG/EVOH/PCTFE multi-layer arrangement,
- PVC/PCTFE multi-layer arrangement,
- PVC/PE/PCTFE multi-layer arrangement,
- PVC/PCTFE/PVC multi-layer arrangement and
- PVC/EVOH/PCTFE-multi-layer arrangement.

11. The plastic foil molded part (2, 12, 20) accordi ng to claim 10, wherein the transparent carrier substrate of the plastic foil molded part (2, 12, 20) is based on a multi-layer arrangement with at least one interior layer and two cover layers and the semitransparent function layer is arranged between the interior layer and one of the two cover layers, wherein the interior layer is a COC layer and the two cover layers respectively are a PP layer.

12. A blister or blister packaging (1, 11, 19), in particular tablet blister, comprising a plastic foil molded part (2, 12, 20) according to any of claims 1 to 11 and a preferably opaque cover foil (3, 13), wherein the plastic foil molded part (2, 12, 20) defines the front side of the blister (1, 11, 19) and the cover foil (3, 13) defines the back side of the blister (1, 11, 19).

13. The blister (1, 11, 19) according to claim 12, wherein the cover foil (3, 13) is opaque and the blister (1, 11, 19) is constituted such that the region of a packaged object, e.g. a tablet, removed from the blister (1, 11, 19) by the consumer is recognizable in the form of a motif formed by the first, visually recognizable color and the second, visually recognizable color upon viewing the front side of the blister (1, 11, 19) in transmitted light as a result of the part of the opaque cover foil (3, 13) no longer being present in this region.

14. The blister (1, 11, 19) according to any of claims 12 or 13, wherein the blister is a blister for pharmaceutical products, preferably a tablet packaging or a tablet blister.

15. A method for manufacturing a plastic foil molded part (2, 12, 20) according to any of claims 1 to 11, comprising
a) the step of supplyi ng a transparent carrier substrate;
b) the step of forming the transparent carrier substrate, preferably by means of thermoforming; and
c) the step of providing the formed transparent carrier substrate with a semitransparent function layer.

16. The method accordi ng to claim 15, wherein in step c) the semitransparent function layer is applied by means of vapor deposition or by printing technology.

17. The method accordi ng to claim 15, wherein the step c) is effected such that
c1) a separate transparent carrier substrate which has a semitransparent function layer is supplied; and
c2) the separate transparent carrier substrate having the semitransparent function layer is applied onto the formed transparent carrier substrate, e.g., by means of H PF (high-pressure forming method) or by means of an adhesive layer.

18. A method for manufacturing a plastic foil molded part (2, 12, 20) according to any of claims 1 to 11, comprising
a) the step of supplyi ng a transparent carrier substrate; or in the case that the transparent carrier substrate is based on a multi-layer arrangement, the step of supplying at least one layer of the multi-layer arrangement forming the transparent carrier substrate;
b) the providing of the transparent carrier substrate with a semitransparent function layer; or in the case that the transparent carrier substrate is based on a multi-layer arrangement, the providing of the at least one layer of the multi-layer arrangement forming the transparent carrier substrate with a semitransparent function layer;
c) the step of forming the transparent carrier substrate having the semitransparent function layer, obtained after the step b), preferably by means of thermoforming.

19. The method according to claim 18, wherein in step b) the semitransparent function layer is applied by means of vapor deposition or by printing technology.

## Revendications

1. Pièce moulée en feuille plastique (2, 12, 20) destinée à un blister (1, 11, 19), en particulier à un blister pour comprimés, **caractérisée en ce que** la pièce moulée en feuille plastique (2, 12, 20) comprend : un substrat porteur transparent comportant une couche fonctionnelle semi-transparente, cependant que la couche fonctionnelle semi-transparente est telle que la pièce moulée en feuille plastique (2, 12, 20) présente, lors de l'observation en lumière incidente, une première couleur, visuellement reconnaissable, et présente, lors de l'observation en lumière transmise, une deuxième couleur, visuellement reconnaissable.

2. Pièce moulée en feuille plastique selon la revendication 1, cependant que la couche fonctionnelle semi-transparente ne se trouve que dans une zone partielle ou dans plusieurs zones partielles de la pièce moulée en feuille plastique (2, 12, 20).

3. Pièce moulée en feuille plastique selon la revendication 2, cependant que la couche fonctionnelle semi-transparente comporte des évidements coïncidant avec des cavités (6, 16) de la pièce moulée en feuille plastique (2, 12, 20).

4. Pièce moulée en feuille plastique (2, 12, 20) selon la revendication 1, cependant que la pièce moulée en feuille plastique (2, 12, 20) est telle que, en cas de la présence d'objets emballés, par exemple de comprimés, et de la présence d'une feuille opaque de recouvrement (3, 13) fermant la pièce moulée en feuille plastique (2, 12, 20), un objet emballé prélevé par le consommateur est, au vu de l'absence de la feuille opaque de recouvrement (3, 13) dans la zone de l'objet prélevé, reconnaissable en lumière transmise lors de l'observation de la pièce moulée en feuille plastique (2, 12, 20) depuis le côté opposé à la feuille de recouvrement (3, 13), sous forme d'un motif constitué par la première couleur, visuellement reconnaissable, et par la deuxième couleur, visuellement reconnaissable.

5. Pièce moulée en feuille plastique (2, 12, 20) selon une des revendications de 1 à 4, cependant que la couche fonctionnelle semi-transparente comporte une structure multicouche ayant deux couches métalliques semi-transparentes et une couche diélectrique agencée entre les deux couches métalliques semi-transparentes.

6. Pièce moulée en feuille plastique (2, 12, 20) selon la revendication 5, cependant que les deux couches métalliques semi-transparentes sont, indépendamment l'une de l'autre, constituées d'un métal, et que le métal est respectivement choisi dans le groupe constitué par Al, Ag, Ni, Cr, Cu, Au et par un alliage d'un ou de plusieurs des éléments mentionnés ci-dessus, et que la couche diélectrique est une couche de SiO₂, une couche de ZnO, une couche de Al₂O₃, une couche de TiO₂, une couche en un nitrure ou oxynitrure d'un des éléments Si, Zn, Al ou Ti, ou une couche de MgF₂ ou une couche de nitrocellulose, par exemple pouvant être obtenue par impression.

7. Pièce moulée en feuille plastique (2, 12, 20) selon la revendication 6, cependant que les deux couches métalliques semi-transparentes sont choisies en Al ou en Ag, et que la couche diélectrique est une couche de SiO₂.

8. Pièce moulée en feuille plastique (2, 12, 20) selon une des revendications de 5 à 7, cependant que la pièce moulée en feuille plastique (2, 12, 20) apparaît dorée lors de l'observation en lumière incidente, et présente une teinte bleue lors de l'observation en lumière transmise.

9. Pièce moulée en feuille plastique (2, 12, 20) selon une des revendications de 1 à 4, cependant que la couche fonctionnelle semi-transparente peut être obtenue par impression au moyen d'une composition de pigments à effets.

10. Pièce moulée en feuille plastique (2, 12, 20) selon une des revendications de 1 à 9, cependant que le substrat porteur transparent de la pièce moulée en feuille plastique (2, 12, 20) est basé sur un agencement multicouche ayant au moins deux couches, et que la couche fonctionnelle semi-transparente est agencée entre les deux couches, ou que le substrat porteur transparent de la pièce moulée en feuille plastique (2, 12, 20) est basé sur un agencement multicouche ayant au moins une couche intérieure et deux couches de recouvrement, et que la couche fonctionnelle semi-transparente est agencée entre la couche intérieure et une des deux couches de recouvrement, cependant que l'agencement multicouche est de préférence choisi parmi le groupe des éléments suivants :
- agencement multicouche PVC/PVDC,
- agencement multicouche PVC/PE/PVDC,
- agencement multicouche PVC/ACLAR®,
- agencement multicouche COC/COC,
- agencement multicouche PP/COC/PP,
- agencement multicouche PP/COC/EVOH/PP,
- agencement multicouche PETG/COC/PETG
- agencement multicouche PVC/COC/PVC,
- COC revêtu de PVDC,
- agencement multicouche PETG/PCTFE,
- agencement multicouche PETG/EVOH/PCTFE,
- agencement multicouche PVC/PCTFE,
- agencement multicouche PVC/PE/PCTFE,
- agencement multicouche PVC/PCTFE/PVC,
- agencement multicouche PP/EVOH/PCTFE.

11. Pièce moulée en feuille plastique (2, 12, 20) selon la revendication 10, cependant que le substrat porteur transparent de la pièce moulée en feuille plastique (2, 12, 20) est basé sur un agencement multicouche ayant au moins une couche intérieure et deux couches de recouvrement, et que la couche fonctionnelle semi-transparente est agencée entre la couche intérieure et une des deux couches de recouvrement, cependant que la couche intérieure est une couche de COC et que les deux couches de recouvrement sont respectivement une couche de PP.

12. Blister ou emballage blister (1, 11, 19), en particulier blister pour comprimés, comprenant une pièce moulée en feuille plastique (2, 12, 20) selon une des revendications de 1 à 11 et une feuille de recouvrement (3, 13) de préférence opaque, cependant que la pièce moulée en feuille plastique (2, 12, 20) définit la face avant du blister (1, 11, 19) et que la feuille de recouvrement (3, 13) définit la face arrière du blister (1, 11, 19).

13. Blister (1, 11, 19) selon la revendication 12, cependant que la feuille de recouvrement (3, 13) est opaque et que le blister (1, 11, 19) est tel que la zone d'un objet emballé prélevé du blister (1, 11, 19) par le consommateur, par exemple d'un comprimé, est, à la suite de la partie de la feuille opaque de recouvrement (3, 13) ne se trouvant plus dans cette zone, reconnaissable lors de l'observation de la face avant du blister (1, 11, 19) en lumière transmise sous forme d'un motif constitué par la première couleur, visuellement reconnaissable, et par la deuxième couleur, visuellement reconnaissable.

14. Blister (1, 11, 19) selon une des revendications 12 ou 13, cependant que le blister est un blister pour produits pharmaceutiques, de préférence un emballage de comprimés ou un blister pour comprimés.

15. Procédé de fabrication d'une pièce moulée en feuille plastique (2, 12, 20) selon une des revendications de 1 à 11, comprenant
a) l'étape de la mise à disposition d'un substrat porteur transparent ;
b) l'étape du formage du substrat porteur transparent, de préférence par thermoformage ; et
c) l'étape du placement d'une couche fonctionnelle semi-transparente sur le substrat porteur transparent formé.

16. Procédé selon la revendication 15, cependant que la couche fonctionnelle semi-transparente est appliquée à l'étape c) par dépôt en phase vapeur ou par impression.

17. Procédé selon la revendication 15, cependant que l'étape c) a lieu en ce que
cl) un substrat porteur transparent distinct comportant une couche fonctionnelle semi-transparente est mis à disposition ; et
c2) le substrat porteur transparent distinct comportant la couche fonctionnelle semi-transparente est appliqué sur le substrat porteur transparent formé, par exemple par procédé HPF (High-Pressure-Forming) ou au moyen d'une couche de colle.

18. Procédé de fabrication d'une pièce moulée en feuille plastique (2, 12, 20) selon une des revendications de 1 à 11, comprenant
a) l'étape de la mise à disposition d'un substrat porteur transparent ; ou, dans le cas où le substrat porteur transparent est basé sur un agencement multicouche, l'étape de la mise à disposition d'au moins une couche de l'agencement multicouche constituant le substrat porteur ;
b) le placement d'une couche fonctionnelle semi-transparente sur le substrat porteur transparent ; ou, dans le cas où le substrat porteur transparent est basé sur un agencement multicouche, le placement d'une couche fonctionnelle semi-transparente sur la au moins une couche de l'agencement multicouche constituant le substrat porteur ;
c) l'étape du formage du substrat porteur transparent obtenu après l'étape b) et comportant la couche fonctionnelle semi-transparente, de préférence par thermoformage.

19. Procédé selon la revendication 18, cependant que la couche fonctionnelle semi-transparente est appliquée à l'étape b) par dépôt en phase vapeur ou par impression.
